# EUROPÄISCHE PATENTSCHRIFT

(11) **EP 2 499 538 B1**
(45) Veröffentlichungstag und Bekanntmachung des Hinweises auf die Patenterteilung: **04.01.2017**
(21) Anmeldenummer: 09801674.4
(22) Anmeldetag: 13.11.2009
(51) Int. Cl.: G03B 21/56, F21S 10/00, G09F 27/00, B44F 1/00, G09F 19/12, E04F 15/00, G02F 1/11

(54) **SYSTEM UND VERFAHREN ZUR DARSTELLUNG OPTISCHER EFFEKTE**
SYSTEM AND PROCEDURE FOR DISPLAY OF OPTICAL EFFECTS
SYSTÈME ET PROCÉDURE D'AFFICHAGE D'EFFETS OPTIQUES

(43) Veröffentlichungstag der Anmeldung: 19.09.2012
(73) Patentinhaber: Kommanditgesellschaft Synoptrix Lichttechnik GmbH & Co., 22303 Hamburg (DE)
(72) Erfinder: PREHN, Horst, 35305 Grünberg (DE)
(74) Vertreter: advotec.
(86) Internationale Anmeldenummer: PCT/EP2009/065159
(87) Internationale Veröffentlichungsnummer: WO 2011/057671

(56) Entgegenhaltungen:
- EP-A1- 0 648 048
- EP-A1- 0 682 782
- EP-A1- 1 802 113
- WO-A2-02/069030
- DE-A1- 2 247 389
- DE-A1-102005 027 389
- US-B1- 6 389 935
- CH. SRIPAIPAN, CH. F. HAYES, G. T. FANG: "Ultrasonically-induced optical effect in a nematic liquid crystal" PHYSICAL REVIEW A, Bd. 15, Nr. 3, 1. März 1977 (1977-03-01), Seiten 1297-1303, XP002573589

## Beschreibung

Die Erfindung betrifft ein System zur Darstellung optischer Effekte nach dem Oberbegriff des Anspruchs 1 und ein Verfahren zur Darstellung optischer Effekte nach dem Oberbegriff des Anspruchs 18.

Aus der EP 0682782 ist zwar ein System und Verfahren zur Modulation und Darstellung optischer Effekte bekannt, bei welchen dynamische Bilder erzeugt werden und deren Struktur und/oder Farbe mittels verschiedener Signalquellen moduliert wird. Nachteilig daran ist jedoch, dass das aus der Beleuchtungsvorrichtung austretende Licht prinzipbedingt bereits sichtbar die darzustellende Bildinformation enthält. Ein weiterer Nachteil daran ist, dass das System bzw. Verfahren bezüglich der Variabilität der Darstellungsmöglichkeiten sowie der Veränderungsmöglichkeiten relativ unflexibel ist, da sich für derartige Veränderungen nur die Beleuchtungsvorrichtung selbst anbietet und außerhalb der Beleuchtungsvorrichtung prinzipbedingt keine Veränderungen stattfinden.

Die EP 1 802 113 A1 zeigt einen Rückprojektions-Flüssigkristallbildschirm kompakter Bauform mit einem optischen Modulator, der als LCD-Typ zur Polarisationsbeeinflussung aufgebaut sein kann und eine entsprechend des Videoinhalts wahrnehmbare Intensitätsmodulation ausführt. Der Rückprojektions-Flüssigkristallbildschirm ist auf eine platzsparende Ausgestaltung gerichtet und weist infolge der Strahlengeometrie hinsichtlich Form und Dimensionierung genau festgelegte Elemente auf.

Die WO 02/069030 A2 beschreibt eine Bildschirm-Anordnung mit einem weiten Luminanz-Dynamikbereich. Dazu weist die Anordnung eine zweistufige Lichtmodulation auf, die ausgehend von einer Lichtquelle mit einem ersten Modulator und über ein optisches System und einen zweiten Modulator ein Bild auf einem Projektionsbildschirm abbildet. Die Modulatoren können dabei jeweils als LCD-Bildschirm ausgeführt sein, deren einzelne Elemente in bekannter Weise entsprechend eines Bildinhalts angesteuert werden.

Auch sind Vorrichtungen bekannt, die eine Bilddarstellung mit der Wiedergabe von Audiosignalen verbinden. So beschreibt die DE 10 2005 027 389 A1 eine Bildprojektionsvorrichtung mit einer Projektionsfläche, welche einen Schwingungsgeber als Tonwiedergabevorrichtung umfasst, der zur Erzeugung von Schallwellen Vibrationen in die Projektionsfläche einkoppelt.

In der US 6,389,935 B1 ist ein Projektionsbildschirm beschrieben, dessen Projektionsfläche gleichzeitig als Flächenlautsprecher ausgebildet ist.

Aufgabe der vorliegenden Erfindung ist es daher, ein neues System bzw. Verfahren zur Darstellung optischer Effekte vorzuschlagen, mit welchen die obigen Nachteile vermieden werden und ein einfacher handhabbares bzw. flexibler veränderbares System bzw. Verfahren zur Modulation und Darstellung optischer Effekte geschaffen wird, welche es darüber hinaus ermöglichen, das aus der Beleuchtungsvorrichtung austretende Licht neutral und ohne sichtbare Bildinformation austreten zu lassen.

Diese Aufgabe wird durch die vorliegende Erfindung nach der Lehre der Ansprüche 1 und 18 gelöst.

Vorteilhafte Ausführungsformen der Erfindung sind Gegenstand der Unteransprüche.

Nach Anspruch 1 wird das Problem gelöst durch ein System zur Darstellung optischer Effekte mit einer Beleuchtungsvorrichtung und einem darstellenden Objekt, wobei die Beleuchtungsvorrichtung zumindest eine einer Lichtquelle nachgeschaltete Eingangspolarisationseinheit zur Polarisationsbeeinflussung sowie zumindest eine der Eingangspolarisationseinheit nachgeschaltete individuell ansteuerbare Modulationseinheit zur Polarisationsbeeinflussung und/oder Retardanzbeeinflussung aufweist und wobei das darstellende Objekt zumindest eine Objektretardereinheit zur Retardanzbeeinflussung sowie eine der Objektretardereinheit nachgeschaltete Ausgangspolarisationseinheit aufweist, und die Beleuchtungsvorrichtung in modularer Bauweise ausgeführt ist, wobei sich in einen Lichtweg nach der Eingangspolarisationseinheit weitere optische Funktionselemente zur Retardanzbeeinflussung in gewünschter Anzahl und Anordnung einbringen lassen und das darstellende Objekt aus passiven optischen Elementen besteht, das darstellende Objekt in unterschiedlicher räumlicher Beabstandung und daraus resultierender frei beweglicher Anordnung außerhalb der Beleuchtungsvorrichtung und dieser nachgeschaltet angeordnet ist und eine beliebige ausleuchtbare Form und Dimension aufweist, wobei aus der Beleuchtungsvorrichtung austretendes Licht eine innere Struktur mit einer definierten, für das Auge ununterscheidbaren internen Zusammensetzung aufweist, wobei die Objektretardereinheit des darstellenden Objekts eine strukturierte, optisch anisotrope Schicht aufweist, deren Struktur einer reversibel oder irreversibel eingeprägten, latenten Bildinformation entspricht, wodurch die latente Bildinformation in Form eines entsprechend eingeprägten Musters von lokalen optischen Gangunterschieden vorliegt und wobei das aus der Beleuchtungsvorrichtung austretende mittels Modulationseinheit modulierte Licht auf die Objektretardereinheit trifft, um dort mit der eingeprägten Bildinformation zusammen zu wirken, wodurch optische Effekte mittels der Ausgangspolarisationseinheit visualisiert werden können.

Der Abstand zwischen Beleuchtungsvorrichtung und darstellendem Objekt ist dabei grundsätzlich beliebig. Er kann beispielsweise wenige Zentimeter betragen aber auch mehrere Meter. Durch die räumliche Beabstandung und die daraus resultierende Anordnung der Ausgangspolarisationseinheit außerhalb der Beleuchtungsvorrichtung ergibt sich unter anderem der Vorteil, dass der Lichtweg zwischen Beleuchtungsvorrichtung und darstellendem Objekt zwischen der Eingangspolarisationseinheit und der Ausgangspolarisationseinheit angeordnet ist. Dadurch kann erreicht werden, dass dem Licht zwischen Beleuchtungsvorrichtung und darstellendem Objekt eine sichtbare Bildinformation nicht entnehmbar ist und dieses neutral erscheint.

Weiterhin begünstigt die räumliche Trennung sowie die operative und/oder funktionale Anordnung von Beleuchtungsvorrichtung und darstellendem Objekt die Veränderungsmöglichkeiten der Darstellung optischer Effekte. Dadurch kann nämlich sowohl innerhalb der Beleuchtungsvorrichtung eine Veränderung der Darstellung der optischen Effekte bewirkt werden, sowie diese Veränderung auch im darstellenden Objekt selbst bewirkt werden. Damit bestehen sowohl technisch als auch rein örtlich mindestens zwei kombinierbare Möglichkeiten der Veränderung der Darstellung optischer Effekte. Besondere Vorteile bietet dies insbesondere bei beispielsweise in Bauwerken fest verankerten darstellenden Objekten, wie beispielsweise Fliesen.

Die Eingangspolarisationseinheit in der Beleuchtungsvorrichtung dient zunächst dem Zweck, eine Eingangspolarisation des verwendeten Lichtes zu erzeugen. Die Eingangspolarisation kann dabei sowohl konstant über das gesamte Lichtfeld erfolgen als auch ortsabhängig über das Lichtfeld, so dass einige Bereiche des Lichtfeldes unterschiedlich und/oder gar nicht polarisiert sind. Dadurch kann in der Beleuchtungsvorrichtung für eine Sichtbarkeit bzw. Unsichtbarkeit verschiedener Bereiche im darstellenden Objekt gesorgt werden.

Das durch die Eingangspolarisationseinheit geleitete Licht wird dann auf zumindest eine Modulationseinheit geleitet, welche einen Anteil der oben genannten Veränderung bewirken kann. Mittels dieser Modulationseinheit kann beispielsweise die Polarisation und/oder Retardanz (Gangunterschied) des Lichtfeldes zeitabhängig und/oder ortsabhängig beeinflusst werden. Eine ortsabhängige Beeinflussung kann sich dabei durch örtlich unterschiedliche Beeinflussung in unterschiedlichen Bereichen des Lichtfeldes darstellen und eine zeitabhängige Beeinflussung kann sich dabei durch mit zunehmender Zeit stärker oder schwächer werdender Beeinflussung darstellen. Durch geeignete Wahl dieser Polarisationsbeeinflussung und/oder Retardanzbeeinflussung kann die Lichtbeschaffenheit, des aus der Beleuchtungsvorrichtung austretenden Lichtes, bezüglich Polarisation und Retardanz ortsabhängig und/oder zeitabhängig moduliert werden, wodurch sich dann im darstellenden Objekt verschiedene optische Effekte ergeben.

Das darstellende Objekt weist zumindest eine Objektretardereinheit auf, wodurch ein weiterer Anteil der oben genannten Veränderung bewirkt werden kann. Die Objektretardereinheit kann dabei die gleichen Beeinflussungsmöglichkeiten wie die zuvor beschriebene Modulationseinheit in der Beleuchtungsvorrichtung wahrnehmen, wobei dann die in der Objektretardereinheit bewirkten Polarisations- und Retardanzbeeinflussungen mit denjenigen aus der Modulationseinheit zusammenwirken, sich beispielsweise überlagern, können.

Weiterhin ist die Objektretardereinheit zur reversiblen oder irreversiblen Einprägung einer Bildinformation geeignet, wodurch sich ein weiterer Beitrag zur oben genannten Veränderung bietet. Diese reversible oder irreversible Einprägung einer Bildinformation in die Objektretardereinheit kann beispielsweise durch gezielte externe Beaufschlagung mit Energien, wie Licht oder mechanischem Druck auf beispielsweise eine Flüssigkristallschicht, und/oder durch eine kontrollierte und lokal wirksame Stoffumwandlung und/oder Strukturumwandlung erfolgen und weitere Effektveränderungen bewirken.

Weiterhin umfasst das darstellende Objekt eine Ausgangspolarisationseinheit, welche beispielsweise als Analysator wirken kann. Damit können dann die zuvor noch unsichtbaren optischen Effekte visualisiert werden.

Die in der Beleuchtungsvorrichtung und der Objektretardereinheit enthaltenen Einheiten können dort auch mehrfach vorgesehen sein, um insbesondere die optischen Effekte umfangreicher und interessanter zu gestalten und noch mehr Modifikationsmöglichkeiten zu bieten.

Insbesondere zeichnet sich die erfindungsgemäße Lichtbeschaffenheit des Leuchtfeldes dadurch aus, dass es für das Auge als Ganzes zwar permanent unverändert homogen und ohne eine erkennbare bzw. unterscheidbare Struktur bzw. Helligkeits- und/oder Farbkontraste erscheint, aber dennoch eine spezifizierte räumlich und/oder zeitlich strukturierte aber unsichtbar bleibende interne Lichtbeschaffenheit enthält, welche zudem eine durch mehrere Steuersignale entsprechend kontrollierbare parametrische Lichtmodulation aufweist, wobei auch im Zuge der Variation der Lichtbeschaffenheit weder die innere Struktur selbst noch deren Änderungen für das Auge wahrnehmbar sind, sodass unter der Beleuchtung eines Darstellenden Objekts in Gegenwart von jeweils mitbeleuchteten beliebigen sonstigen Objekten die Optischen Effekte ausschließlich innerhalb der darstellenden Objekte auftreten, während alle sonstigen Objekte dabei sichtlich unverändert erscheinen.

Zu diesem Zweck weist das Licht eine bestimmte und jeweils definierte für das Auge ununterscheidbare interne Zusammensetzung sowohl aus unpolarisierten als auch entsprechend polarisierten Lichtanteilen auf, wobei in den Lichtweg innerhalb der Beleuchtungsvorrichtung, ausgehend von mindestens einer Lichtquelle mit definierter spektraler Emission und einer nachgeschalteten Polarisationseinheit, welche bestimmte unterschiedliche Feldbereiche jeweils mit einer definierten Polarisationsrichtung sowie mit einer unpolarisierten Strukturierung aufweist, außerdem zusätzliche sowie entsprechend ausgebildete polarisationsoptische Elemente eingebracht werden, die insbesondere in Form von aktiv ansteuerbaren Modulationseinheiten vorliegen, und wobei diese dazu verwendet werden, um innerhalb der jeweils in definierter Weise polarisierten Lichtanteile bzw. Leuchtfeldbereiche eine gezielte räumliche und/oder zeitliche Variation bzw. Modulation der betreffenden Polarisationszustände und/oder der Optischen Gangunterschiede (Retardation) zu bewirken, sodass diese zur Erzielung der besagten komplexen dynamischer Optischen Effekte innerhalb des darstellenden Objektes genutzt werden können, welche in das betreffende Leuchtfeld eingebracht werden.

Vorteilhaft ist weiterhin die selektive und gezielte polarisierende Visualisierung der latenten Bildinformation bzw. entsprechender Optischer Effekte innerhalb eines aus passiven Elementen bestehenden darstellenden Objekts ausschließlich auf lichtoptischem Wege durch Einbringen des Objekts in das besagte Leuchtfeld, und durch interne Variation der Lichtbeschaffenheit, ohne dass sich dabei dessen äußerlich erkennbare Lichtbeschaffenheit sichtlich verändert.

Vorteilhaft ist weiterhin die wahlweise gezielte Unsichtbarmachung besagter visualisierter Bildinformation bzw. besagter optischer Effekte innerhalb des darstellenden Objektes jedoch von der Beleuchtung in der Weise steuerbar, dass diese mittels der internen Veränderung der Lichtbeschaffenheit aber unter weiterhin fortbestehender sowie sichtlich unveränderter Ausleuchtung des Objekts erfolgt.

Vorteilhaft ist weiterhin die komplexe und gezielt steuerbare multiparametrische Variation von Muster- und Farbeffekten bzw. von Bildmodulation innerhalb der DO auf lichtoptischem Wege mittels der Beleuchtungsvorrichtung, ohne dass sich dabei die äußerlich erkennbare bzw. unterscheidbare Lichtbeschaffenheit innerhalb des Leuchtfeldes sichtlich ändert.

Vorteilhaft ist weiterhin, dass beispielsweise Muster oder Motive mit einer praktisch unbegrenzten Anzahl von Farbtönen und mit entsprechenden Farbpaletten sowie mit unterschiedlicher Farbsättigung und Farbkontrasten erzeugt und innerhalb von Millisekunden extrem schnell gezielt variiert werden können.

Vorteilhaft ist weiterhin, dass ein darstellendes Objekt beliebig formbar sein kann, beispielsweise als flächenhaftes Gebilde (z. B. planares, gekrümmtes oder reliefartig profiliertes Flächenelement), oder auch als körperhaftes Gebilde (z. B. Vollkörper, Hohlkörper) sowie mit vielgestaltiger Oberflächenbeschaffenheit sowie in beliebigen Formvarianten ausgebildet sein kann.

Vorteilhaft ist weiterhin, dass ausschließlich passive darstellende Objekte selbst keinerlei aktive Bauelemente oder bewegliche mechanische Teile enthalten müssen oder irgendeiner elektronischen Steuerung bedürfen, oder irgendeine Stromversorgung oder entsprechende elektrische Leitungen benötigen und dass auch in passiven Objekten dennoch eine aktive Steuerung der optischen Effekte dadurch erzielbar sein kann, dass anstelle einer Steuerung der Elemente selbst dies durch eine unsichtbar bleibende Lichtmodulation mittels einer diesbezüglichen Beleuchtungsanordnung erzielbar sein kann.

Vorteilhaft ist weiterhin, dass die darstellenden Objekte aus einfach herzustellenden passiven Elementen bestehen können, welche kostengünstig und in Massenproduktion herstellbar sind und dass diese darstellenden Objekte sich durch Einfachheit, Robustheit sowie durch die Anwendbarkeit üblicher Bearbeitungs- und Montagetechniken auszeichnen können, sodass sie praktisch in einer Vielzahl von Materialien, Formen, Profilen und mit vielfältiger Oberflächenbeschaffenheit herstellbar sind.

Vorteilhaft ist weiterhin, dass eine latente Bildinformation innerhalb einer Objektretardereinheit in dem Objekt selbst enthalten sein kann und hierbei als optische Materialbeschaffenheit mit einer realen räumlichen Struktur vorliegen kann und sich dadurch von einer sonst üblichen Bildprojektion abgrenzt, wobei selbige mittels einer Abbildungsoptik jeweils eine definierte Objektebene lediglich durch ein auf einem Schirm auffangbares Bild in seiner betreffenden Bildebene scharf abgebildet wird. Bei wechselnden Projektionsabständen ist im Fall einer Bildprojektion demzufolge prinzipiell eine entsprechende Nach- Fokussierung notwendig. Dieser grundlegende Unterschied der Verwendung eines darstellenden Objekts in Verbindung mit einer einfachen Beleuchtungsanordnung bzw. Leuchtfeld bietet im Gegensatz zu den gängigen Projektionsverfahren den zusätzlichen Vorteil, dass auf eine diesbezügliche Abbildungsoptik gänzlich verzichtet werden kann, wodurch somit auch die nachteilige Fokussierung sowie die mit jeder Abbildung einhergehenden Abbildungsfehler entfallen können, sodass z. B. innerhalb eines einzigen Leuchtfeldes ganz unterschiedlich ausgebildete materielle darstellende Objekte mit jeweils unterschiedlich gestalteten latenten Motiven eingebracht werden können und darin auf verschiedene Weise und mit unterschiedlichem Abständen zum besagten Leuchtfeld sowie untereinander in unterschiedlichen Raumtiefen beliebig angeordnet und außerdem darin räumlich frei bewegt werden können.

Vorteilhaft ist weiterhin, dass mittels der gezielt ansteuerbaren Beleuchtungsvorrichtung auf einen entsprechenden Steuerbefehl hin, ein gewünschter sofortiger Wechsel der Erscheinungszustände innerhalb eines darstellenden Objekts bewirkt werden kann und zwar zwischen einem sichtbaren Zustand (Aktivierungszustand) einerseits, wobei die latente Bildinformation unmittelbar visualisiert wird und einem unsichtbaren Zustand (Neutralzustand) andererseits, bei dem weder die latente Bildinformation noch irgendwelche diesbezüglichen optischen Effekte auftreten. Der anwendungsmäßige und gestalterische Vorteil im Hinblick auf eine jeweils gewünschte episodenhafte Visualisierung der optischen Effekte ist darin zu sehen, dass die Anmutung der verwendeten Objekte auch unter fortbestehender Beleuchtung solange in einer neutralen Erscheinung verbleiben kann, bis für eine bestimmte Zeitdauer eine gewünschte Aktivierung eingeschaltet wird. Bei Verwendung eines darstellenden Objekts in Transmission kann das Objekt während des unsichtbaren Zustands selbst durchgängig transparent bleiben und weist dabei keinerlei sichtbare Struktur auf. Bei Verwendung eines darstellenden Objekts in Reflexion kann lediglich eine diffus streuende Reflexionsschicht hinter der transparenten optischen Funktionsschicht als neutraler Hintergrund durchscheinen. Vorteilhaft ist dabei außerdem, dass die Beleuchtung weder beim Wechsel der Zustände als auch während der Visualisierung mit Bildmodulation weiterhin fortbesteht und auch die Beleuchtung selbst für das Auge weiterhin unverändert erscheinen kann.

Vorteilhaft ist weiterhin, dass in ein globales Leuchtfeld eine praktisch unbegrenzte Anzahl von darstellenden Objekten in beliebiger Form und Dimension an beliebiger Stelle frei angeordnet bzw. bewegt werden können, wobei diese einfach eingebracht und/oder oder entsprechend frei beweglich sein können bzw. wieder entfernt werden können, sodass unterschiedlich gestaltete darstellende Objekte mit verschiedenartigen Motiven mittels der betreffenden Beleuchtungsvorrichtung mit Lichtmodulation simultan und synchron zueinander animiert werden können.

Vorteilhaft ist weiterhin, dass sich in einem darstellenden Objekt mehrere bildtragende transparente Elemente in entsprechender Überlagerung und Überdeckung in der Weise anordnen lassen, dass dadurch besondere räumlich erscheinende transluzierende optische Effekte erzielbar sind.

Vorteilhaft ist weiterhin, dass bei der Erzeugung des betreffenden Leuchtfeldes mit beispielsweise Lichtmodulation eine Vielzahl von Lichtquellen mit Kunstlicht, vorzugsweise auch mit weißem Licht, aber auch Tageslichtquellen eingesetzt werden können, und dass dabei die Lichtqualität auch während der Lichtmodulation jeweils unverändert erscheint, wodurch sich die besagten optischen Effekte ausschließlich in den optischen Elementen selbst abspielen, während alle sonst mitbeleuchteten Objekte dabei unverändert erscheinen, sodass durch die Installation und während des Betriebs die Lichtqualität beispielsweise bei einer Raumbeleuchtung bzw. Objektbeleuchtung permanent erhalten bleibt und somit auch kein störendes Flackern oder entsprechende farbige Lichteffekte erscheinen, wie dies z. B. bei herkömmlichen dynamischen Bildprojektionen oder Farblicht-Inszenierungen der Fall ist.

Weiterhin vorteilhaft ist, dass eine unverzögerte Echtzeit-Kontrolle komplexer dynamischer optischer Effekte ermöglicht wird, wodurch eine Visualisierung verschiedenartiger dynamischer Prozesse (Prozessvisualisierung) ermöglicht wird, wobei der betreffende Prozessverlauf von entsprechenden prozessrelevanten Signalen begleitet sein kann bzw. mit diesen Signalen entsprechend korreliert sein kann, beispielsweise zur Visualisierung von bestimmten Prozessabläufen aufgrund mehrerer entsprechender Sensorsignale oder von entsprechenden Prozess-Kontrollparametern oder zur Musikvisualisierung bzw. Musikanimation betreffender optischer Effekte auf der Basis von entsprechenden Signalen welche mit Hilfe entsprechender Algorithmen aus Audiosignalen evaluiert werden können.

Bei einer vorteilhaften Ausführungsform weist die Beleuchtungsvorrichtung weiterhin zumindest eine Beleuchtungsretardereinheit zur ortsabhängigen und/oder zur zeitabhängigen Retardanzbeeinflussung auf. Damit lässt sich innerhalb der Beleuchtungsvorrichtung gezielt die Retardanz des Lichtes, beispielsweise in verschiedenen Bereichen des Lichtfeldes verändern und somit die optischen Effekte umfangreicher und interessanter gestalten.

Vorteilhaft dabei ist, dass im Fall des Einsatzes von beispielsweise fest installierten darstellenden Objekten, welche eine latente Bildinformation mit jeweils vorbestimmten Motiven tragen, darüber hinaus und jederzeit eine zusätzliche und schnell wechselnde Modifikation dieser bereits bestehenden Motive sowohl hinsichtlich ihrer jeweils aktuell nutzbaren Farbpalette sowie ihrer motivischen Gestaltung vorgenommen werden kann, ohne dass dazu eine materielle Veränderung der Objekte oder ein Austausch derselben notwendig wäre. Besonders vorteilhaft ist, dass eine diesbezüglich gewünschte bestimmte visuelle Performance sowie ihre Modifikation allein mit Hilfe der Beleuchtung erzielt werden kann, indem in den Lichtweg der Beleuchtungsvorrichtung lediglich ein oder mehrere unterschiedlich ausgebildete sowie bildmäßig entsprechend strukturierte Objektretardereinheiten eingebracht werden oder gewechselt werden können, welche in dem Fall eine definierte lokal adressierbare Verzögerung aufweisen, welches sich dann auf die jeweilige Erscheinung des Motivs in gewünschter Weise auswirkt, ohne dass sich die Beleuchtung selbst dabei sichtbar verändert.

Vorteilhaft weisen die Beleuchtungsretardereinheit und/oder die Objektretardereinheit und/oder die Modulationseinheit zumindest eine optisch anisotrope Substanz und/oder eine Schicht mit einer optisch anisotropen Materialeigenschaft auf. Die optisch anisotropische Substanz kann beispielsweise doppelbrechende Eigenschaft haben, womit sich Polarisation und Retardanz beeinflussen lassen.

Bei einer weiteren vorteilhaften Ausführungsform kann die Beleuchtungsretardereinheit und/oder die Objektretardereinheit und/oder die Modulationseinheit eine ortsabhängige optische Anisotropie und/oder eine ortsabhängige Schichtdicke und/oder eine ortsabhängige Orientierung einer Materialeigenschaft und/oder einen ortsabhängigen helikalen Pitch aufweisen. Durch diese Möglichkeiten lassen sich ebenfalls Polarisation und Retardanz des Lichtes verändern.

Bei einer weiteren vorteilhaften Ausführungsform sind die Eingangspolarisationseinheit und/oder die Ausgangspolarisationseinheit auswechselbar oder entfernbar. Die Eingangspolarisationseinheit und die Ausgangspolarisationseinheit sind nämlich für die Visualisierung von entscheidender Bedeutung. Falls eine dieser Einheiten nicht vorhanden ist, kann eine Visualisierung der optischen Effekte nämlich nicht erfolgen. Damit lässt sich z. B. ein Neutralmodus realisieren, bei welchem keine Effekte sichtbar sind.

Bei einer weiteren vorteilhaften Ausführungsform umfasst die Eingangspolarisationseinheit Bereiche, die keine Polarisation bewirken, wobei diese Bereiche einen unpolarisierenden Lichtfilter aufweisen. Bei bereichsweiser Polarisation des Lichtes in der Eingangspolarisationseinheit kann es nämlich beispielsweise zu Intensitätsschwankungen innerhalb des Leuchtfeldes kommen, weil polarisierte Bereiche in der Regel weniger Lichtintensität aufweisen als nicht polarisierte Bereiche. Somit könnte es Probleme bei der Bildung des angestrebten homogenen und neutralen Leuchtfeldes geben, welche durch einen unpolarisierenden Lichtfilter an diesen Bereichen verhindert werden können. Damit lässt sich nämlich die Intensität der unpolarisierten Bereiche denen der polarisierten Bereiche angleichen.

Bei einer weiteren vorteilhaften Ausführungsform weist die Modulationseinheit zumindest eine mesogene Substanz bzw. mesogene Einheiten, insbesondere Flüssigkristall, zur zeitabhängigen und/oder ortsabhängigen Polarisationsbeeinflussung und/oder Retardanzbeeinflussung auf. Mesogene Substanzen lassen sich einfach verarbeiten und bieten die gewünschten Beeinflussungsmöglichkeiten.

Bei einer weiteren vorteilhaften Ausführungsform ist die zeitabhängige und/oder ortsabhängige Polarisationsbeeinflussung und/oder Retardanzbeeinflussung in der Modulationseinheit über eine Energiebeaufschlagung steuerbar. Eine Energiebeaufschlagung ist einerseits einfach zuführbar und andererseits flexibel regelbar, um die gewünschten Beeinflussungen zu bewirken. Insbesondere mesogene Substanzen lassen sich durch Energiebeaufschlagungen hinsichtlich ihrer Polarisationseigenschaft und/oder Retardanzeigenschaft einfach beeinflussen.

Bei einer weiteren vorteilhaften Ausführungsform erfolgt die Energiebeaufschlagung mittels mechanischer und/oder sonischer und/oder thermischer und/oder elektrischer und/oder magnetischer und/oder elektromagnetischer Energieerzeuger auf die mesogene Substanz.

Bei einer weiteren vorteilhaften Ausführungsform umfasst das darstellende Objekt weiterhin eine Reflektionseinheit. Die Ausführungsform dieser Reflektionseinheit ist grundsätzlich beliebig. Eine derartige Reflektionseinheit reflektiert das auf das darstellende Objekt fallende Licht wieder zurück auf die Eintrittseite des darstellenden Objekts. Dadurch lassen sich die optischen Effekte im darstellenden Objekt dann von der Seite her betrachten, von der das darstellende Objekt mit dem Licht bestrahlt wird. Dies kann insbesondere bei baulichen Beschränkungen zu erheblichen Vorteilen führen, wenn beispielsweise das darstellende Objekt als Fliese an einer Wand oder einem Boden befestigt ist und von der Rückseite her nicht zu betrachten ist.

Bei Fehlen der Reflektionseinheit würde das darstellende Objekt nämlich dann in Transmission betrachtet werden, wobei die Bestrahlung des darstellenden Objektes mit dem Licht von der einen Seite des darstellenden Objektes her erfolgt und die Betrachtung der optischen Effekte im darstellenden Objekt von der anderen Seite des darstellenden Objektes her erfolgt. Ein solches darstellendes Objekt ist bezüglich des verwendeten Lichtes transparent und wird in Transmission betrachtet.

Das darstellende Objekt kann sowohl in Transmission als auch in Reflexion einsetzbar sein, sodass damit unzählige und verschiedenartige Anwendungen im Objektbereich oder im Architekturbereich möglich sind, beispielsweise die Verwendung als transparente Objekte (z. B. Fensterelemente, Paneelen, Lichtröhren, Leuchtkörper, animierbare passive Displays etc.) oder als reflexive Objekte (z. B. Fassadenelemente, Fliesenelemente, Paneelen, Leuchtkörper etc.) oder deren Kombinationen.

Bei einer weiteren vorteilhaften Ausführungsform umfasst das darstellende Objekt weiterhin zumindest einen Biegeschwinger, welcher akustische Signale erzeugen kann. Damit lassen sich durch das darstellende Objekt nicht nur Visualisierungen vornehmen sondern auch Intonationen vornehmen. Durch die Verwendung von Biegeschwingern wird kein separater Lautsprecher benötigt und somit eine überaus kompakte Bauweise erlangt.

Bei einer weiteren vorteilhaften Ausführungsform ist der Biegeschwinger in oder an der Objektretardereinheit vorgesehen. Somit lässt sich die kompakte Bauweise nochmals verbessern und bei einer Integration des Biegeschwingers in die Objektretardereinheit sogar maximieren.

Erfindungsgemäß wird die eingangs genannte Problematik weiterhin gelöst durch ein Verfahren zur Darstellung optischer Effekte mit einer wie oben beschriebenen Vorrichtung, bei welchem in der Modulationseinheit durch Energiebeaufschlagung eine Modulation der Lichtbeschaffenheit hinsichtlich der Polarisation und/oder der Retardanz erfolgt, und in der Objektretardereinheit die Modulation der Lichtbeschaffenheit mit der strukturierten, optisch anisotropen Schicht, deren Struktur einer reversibel oder irreversibel eingeprägten latenten Bildinformation entspricht, zusammenwirkt, wodurch optische Effekte mittels der Ausgangspolarisationseinheit visualisiert werden.

Bezüglich der Erklärung des Verfahrensanspruchs 18 wird zunächst vollumfänglich auf die Erklärung zum System-Anspruch 1 verwiesen. Beim erfindungsgemäßen Verfahren erfolgt zunächst in der Modulationseinheit durch Energiebeaufschlagung eine zeitabhängige und/oder ortsabhängige Modulation der Lichtbeschaffenheit hinsichtlich der Polarisation und/oder der Retardanz. Damit wird ein erster Beitrag zur Veränderung der Darstellung der optischen Effekte geschaffen.

Ein zweiter Beitrag zur Veränderung der Darstellung der optischen Effekte kann alternativ oder zusammen mit der Modulation durch Energiebeaufschlagung und/oder durch Stoffumwandlung in der Objektretardereinheit geschaffen werden, wodurch eine zeitabhängige und/oder ortsabhängige reversible oder irreversible Einprägung einer Bildinformation in die Objektretardereinheit erfolgen kann. Eine derartige Einprägung wurde bereits beschrieben.

Schließlich wirkt dann in der Objektretardereinheit die Modulation der Lichtbeschaffenheit durch die Modulationseinheit mit der reversibel oder irreversibel eingeprägten Bildinformation zusammen, wodurch optische Effekte mittels der Ausgangspolarisationseinheit visualisiert werden.

Ein derartiges Zusammenwirken kann sich grundsätzlich beliebig, beispielsweise als Superposition in Addition oder Subtraktion, darstellen.

Bei einer vorteilhaften Ausführungsform des Verfahrens werden durch zumindest bereichsweises Aufheben der Polarisation die im darstellenden Objekt entstehenden optischen Effekte unsichtbar gemacht. Die Entstehung der bereichsweisen Aufhebung ist dabei grundsätzlich beliebig. Die bereichsweise Aufhebung kann beispielsweise in der Eingangspolarisationseinheit oder in der Ausgangspolarisationseinheit erfolgen.

Bei einer weiteren vorteilhaften Ausführungsform des Verfahrens wird die Aufhebung der Polarisation durch Entfernung zumindest einer Polarisationseinheit bewirkt. Wie bereits beschrieben, kann durch Entfernung von beispielsweise der Eingangspolarisationseinheit und/oder der Ausgangspolarisationseinheit eine zumindest temporäre Aufhebung der Polarisation erfolgen, wodurch die optischen Effekte unsichtbar bleiben.

Bei einer weiteren vorteilhaften Ausführungsform des Verfahrens erfolgt die Energiebeaufschlagung auf zumindest eine mesogene Substanz bzw. mesogene Einheit, insbesondere Flüssigkristall. Es wird dazu auf die obige Beschreibung verwiesen.

Bei einer weiteren vorteilhaften Ausführungsform des Verfahrens wird die Energiebeaufschlagung korrespondierend zu einem Basissignal gesteuert. Die Wahl bzw. Ausführungsform des Basissignals ist grundsätzlich beliebig. Es kann sich dabei beispielsweise um ein moduliertes Signal z. B. ein Audiosignal, sowie aber auch einem Sensorsignal, z. B. von einem Drucksensor handeln oder von einem Signalgenerator ausgehen.

Dadurch wird es möglich, die optischen Effekte beispielsweise mit Interaktionen, z. B. Bewegungen von Menschen über Drucksensoren, sowie Intonationen, z. B. über akustische Signale, zu korrespondieren. Damit wird beim Betrachter eine Verbindung zwischen zwei Sinnen, wie beispielsweise Hören-Sehen oder Sehen-Fühlen, hergestellt, was zu besonderen Erlebnissen führen kann.

Bei einer weiteren vorteilhaften Ausführungsform des Verfahrens tritt das von der Beleuchtungsvorrichtung auf das darstellende Objekt treffende Licht durch das darstellende Objekt hindurch, um auf der anderen Seite des darstellenden Objekts betrachtet werden zu können. Dies stellt die oben beschriebene transmissive Möglichkeit der Betrachtung eines transparenten darstellenden Objekts dar.

Bei einer weiteren vorteilhaften Ausführungsform des Verfahrens wird das von der Beleuchtungsvorrichtung auf das darstellende Objekt treffende Licht innerhalb des darstellenden Objekts reflektiert, um auf der Eintrittsseite des darstellenden Objekts betrachtet werden zu können. Dafür ist die oben beschriebene Reflexionseinheit notwendig, um das Licht auf die Eintrittsseite des darstellenden Objekts, wie oben beschrieben, zurückzuleiten.

Mehrere Ausführungsformen sind in den Zeichnungen beispielhaft dargestellt.

Es zeigen:
- **Fig. 1:**: Eine Anordnung eines darstellenden Objekts mit einer Beleuchtungsvorrichtung sowie den internen Aufbau des darstellenden Objekts;
- **Fig. 2:**: einen weiteren internen Aufbau eines darstellenden Objekts;
- **Fig. 3:**: einen schematischen Aufbau einer Beleuchtungsvorrichtung;
- **Fig. 4a:**: den schematischen Aufbau einer Modulationseinheit;
- **Fig. 4b:**: einen weiteren Aufbau einer Modulationseinheit;
- **Fig. 5a:**: ein transmissives darstellendes Objekt mit direkter Rückprojektion;
- **Fig. 5b:**: ein weiteres transmissives darstellendes Objekt mit indirekter Rückprojektion;
- **Fig. 5c:**: ein reflexives darstellendes Objekt mit direkter Aufprojektion;
- **Fig. 5d:**: ein weiteres transmissives darstellendes Objekt mit umgelenkter Rückprojektion;
- **Fig. 5e:**: ein weiteres transmissives darstellendes Objekt mit indirekter Rückprojektion über ein transparentes holographisches optisches Element (THO);
- **Fig. 6a:**: ein Anwendungsbeispiel der Erfindung bei Architekturelementen mit reflexiven darstellenden Objekten;
- **Fig. 6b:**: ein Anwendungsbeispiel der Erfindung bei Architekturelementen mit transmissiven darstellenden Objekten;
- **Fig. 7:**: ein Anwendungsbeispiel der Erfindung in röhrenförmiger Anordnung;
- **Fig. 8:**: ein Anwendungsbeispiel der Erfindung in pyramidenförmiger Anordnung in zwei Varianten;
- **Fig. 9:**: ein Anwendungsbeispiel der Erfindung zur simultanen Wiedergabe von Audiosignalen zusammen mit den optischen Effekten.

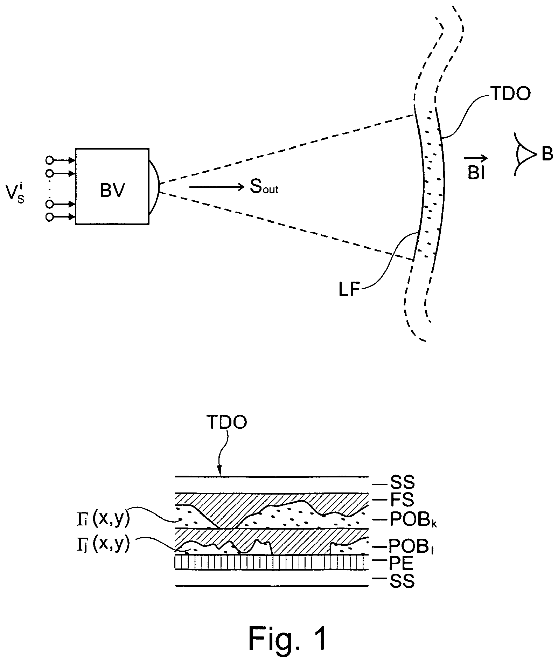

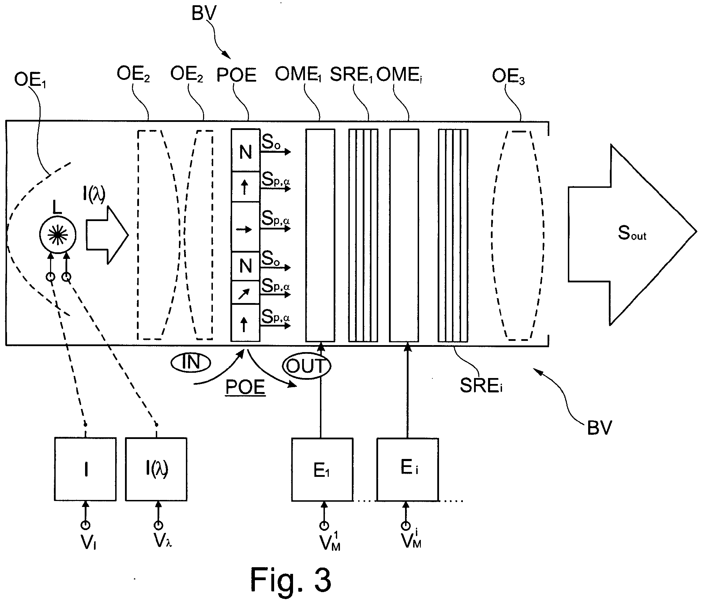

Fig. 1 zeigt schematisch eine Ausführungsform der Erfindung, aufweisend eine in Fig. 3 im Detail dargestellte Beleuchtungsvorrichtung (BV), welche eine jeweils vorbestimmte Anzahl von Eingängen für die Steuersignale Vs aufweist, mit deren Hilfe ein in der BV enthaltenes optisches Modulations-Element (Modulationseinheit, OME) (gemäß Fig. 3) entsprechend angesteuert werden kann. Ausgehend von der BV trifft der Ausgangsstrahl (Sout) in direkter Rückprojektion auf ein darstellendes Objekt (DO), welches in diesem Fall als lichtdurchlässiges darstellendes Objekt (TDO) ausgebildet ist und erzeugt somit ein entsprechendes Leuchtfeld (LF), welches nach dem Durchtritt durch das TDO eine entsprechende Bildinformation (BI) beinhaltet, die vom Beobachter (B) wahrgenommen werden kann und die gemäß der Steuersignale Vs modulierbar bzw. einprägbar ist.

Fig. 1 zeigt außerdem einen schematischen Querschnitt durch ein derartiges TDO mit einer entsprechenden Schichtenstruktur, wobei der Lichtstrahl zunächst durch eine transparente Schutzschicht (SS) hindurchtritt und daraufhin mindestens eine als Polarisations-Optisches-Bildelement (Objektretardereinheit, POB) fungierende optisch anisotrope Schicht durchläuft, welche jeweils eine latente Bildinformation in Form eines bildmäßig adressierbaren optischen Gangunterschiedes Γi(x,y) aufweist und die wahlweise auch mit einer transparenten optisch isotropen Füllschicht (FS) mit geeignetem optischen Brechungsindex versehen sein kann. Nach einer vorbestimmten Anzahl entsprechend ausgebildeter POB schließt sich ein Polarisierendes Element (Ausgangspolarisationseinheit, PE) an, welches in diesem Fall als Analysator fungiert. Den Abschluss können eine oder mehrere transparente Schutzschichten (SS) bilden.

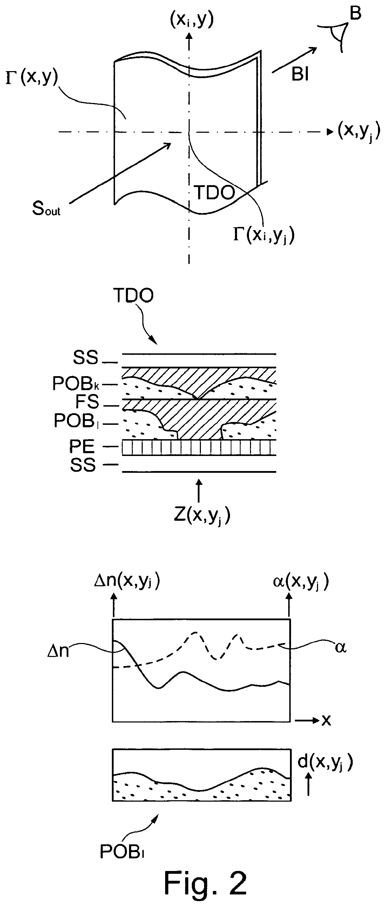

Das in diesem Ausführungsbeispiel beschriebene Transmissive Darstellende Objekt TDO weist in diesem speziellen Fall zwei hintereinander geschichtete unterschiedliche Polarisations-Optische Bildelemente POBk, POB1 mit entsprechend ausgestalteten latenten Motiven auf, welche in Form der betreffenden lokal adressierbaren optischen Gangunterschiede Γi(x,y) und Γj(x,y) eingeprägt sind. In Fig. 2 ist exemplarisch noch einmal der Lichtweg durch ein TDO dargestellt, welches als nicht notwendigerweise planares Element in frei wählbarer Ausformung und in entsprechender Dimensionierung gestaltet werden kann. Die Fig. 2 zeigt zudem schematisch als Prinzip-Skizze einen Schnitt durch ein TDO (z-Richtung, y=const, x=variabel) sowie ein Schichtdickenprofil d(x,yj) eines Polarisationsoptischen Bildelementes POBk sowie die entsprechenden Graphen für die jeweils einzeln oder miteinander im Sinne der Bildkonzeption optisch zusammenwirkenden und bildmäßig entsprechend strukturierten Schichtdicke d(x,yj), der optischen Anisotropie Δn(x,yj) sowie der Orientierung α(x,yj).

In Fig. 3 wird als Schemazeichnung ein Ausführungsbeispiel einer Beleuchtungsvorrichtung angegeben, welche vorzugsweise in modularer Bauweise ausgeführt werden kann. Ausgehend von einer Lichtquelle L, welche Licht mit einer bestimmten bevorzugten spektrale Emission I(λ) aussendet und wobei Mittel vorgesehen sind, wodurch die Lichtintensität mit Hilfe eines Steuersignals VI entsprechend variiert werden kann. Darüber hinaus können auch weitere bekannte Mittel (z. B. Spektrale Mischung verschiedener Lichtquellen, Spektrale Filterkombinationen etc.) eingesetzt werden, um ebenso die Spektrale Emission mittels entsprechender Steuersignale Vλ in gewünschter Weise zu variieren. Als Lichtquellen können je nach Anwendungsfall die üblichen Leuchtmittel wie Glühlampen, Halogenlampen, Metalldampflampen, Xenon-Lampen, Bogenlampen, Leuchtstofflampen, Metalldampflampen, LED-Systeme, OLED u.v.a.m. eingesetzt werden. In den Lichtweg wird zum Zwecke der Visualisierung der latenten Bildinformation innerhalb des betreffenden darstellenden Objekts ein Polarisations-Optisches-Element (Eingangspolarisationseinheit, POE) eingebracht, wobei hierzu entsprechende Mittel (POE-IN) vorgesehen sind, welche es außerdem erlauben das POE wahlweise auch wieder aus dem Strahlengang zu entfernen (POE-OUT), sodass dadurch die Bildinformation sowie die diesbezüglichen Optischen Effekte nach Belieben des Anwenders insgesamt wieder unsichtbar gemacht werden können.

Jedes eingebrachte POE kann demnach auf individuelle Weise ausgebildet sein, wobei alle POE in beliebiger Weise gegeneinander ausgetauscht werden können, sodass sich dadurch jeweils eine bestimmte gewünschte Zusammensetzung aller durch das POE bewirkten Teilstrahlen bzw. Leuchtfeldbereiche ergibt, welche grundsätzlich dabei entweder unpolarisiert oder aber entsprechend polarisiert sein können, wobei sich die jeweils ausgewiesenen polarisierten Bereiche innerhalb des POE außerdem noch durch ihre diesbezüglichen Polarisationsrichtungen auszeichnen. Somit weist ein betreffendes POE eine bestimmte Anzahl und voneinander abgegrenzter sowie jeweils definierter lokaler Domänen bzw. entsprechende Feldbereiche auf, welche zwei grundsätzlich verschiedenartige optische Funktionen erfüllen. Die einen und als Neutral-Domänen bezeichneten und gemäß Fig. 3 mit (N ; So) symbolisierten Feldbereiche sind dadurch gekennzeichnet, dass das innerhalb dieser Bereiche austretende Licht ausschließlich unpolarisiert ist. Andererseits wirken die als Polarisierende Domänen (in Fig. 3 durch (↑; Sp,α) symbolisiert) bezeichneten Feldbereiche innerhalb eines POE jeweils als entsprechend lokalisierte und regional abgegrenzte Eingangs-Polarisatoren mit einer jeweils vorbestimmten Polarisationsrichtung α und dienen dabei der dadurch bewirkten lokal eingrenzbaren polarisierenden Visualisierung der besagten Optischen Effekte innerhalb eines betreffenden Leuchtfeldes des Darstellenden Objekts DO, wohingegen die Neutral-Domänen dazu dienen, dass an den dadurch ausgezeichneten Leuchtfeldbereichen in Verbindung mit dem betreffenden DO in beabsichtigter Weise keine sichtbaren Optischen Effekte erscheinen sollen. Zur Ausführung der Polarisierenden Domänen können alle gebräuchlichen Polarisator-Elemente dienen, welche zu den jeweils gewünschten Formen und Anordnungen entsprechend ausgebildet und angeordnet werden. Im einfachsten Fall können hierzu handelübliche Polarisatorfolien Verwendung finden (z. B. Fa Polatech, Fa. Nitto Denko, Fa.Schott, Fa. 3M), welche als entsprechend geformte Segmente in gewünschter Weise angeordnet und außerdem gemäß der jeweils bevorzugten Polarisationsrichtung (Polarisationswinkel α) entsprechend ausgerichtet werden. Denkbar sind hierbei auch Polarisator-Elemente mit einem jeweils individuell ausgebildeten Richtungs-Gradientenfeld hinsichtlich des Polarisationswinkels, wobei entweder diskrete Feldbereiche mit einer einheitlichen Polarisationsrichtung und/oder kontinuierlich verlaufende Richtungs-Gradienten auftreten können. Außerdem können noch Mittel vorgesehen sein, mit deren Hilfe eine Drehung der jeweiligen Polarisationswinkel innerhalb bestimmter Domänen ermöglicht werden kann. Für den Fall, dass gängige absorbierende Polarisationsfolien Verwendung finden sollten, ist demzufolge die Licht-Transmission bzgl. der Polarisierenden Domänen gegenüber den praktisch ungeschwächten Neutral-Domänen erheblich vermindert, sodass dadurch in den DO entsprechende Helligkeitsunterschiede zwischen den diesbezüglichen Leuchtfeldbereichen auftreten. Nötigenfalls kann auch das Licht beim Durchtritt durch die Neutral-Domänen in einem bestimmten Maß abgeschwächt werden, sodass das von den Neutral-Domänen ausgehende unpolarisierten Licht gegenüber dem von den Polarisierenden Domänen ausgehenden polarisierten Licht praktisch keine sichtbaren Helligkeitsunterschiede mehr wahrgenommen werden können. Derartige in der Helligkeit an die Polarisations-Domänen angepasste Neutral-Domänen weisen somit entsprechende Feldbereiche mit der zusätzlichen optischen Funktion eines Neutralfilters auf. Dabei ist jeweils eine geeignete Optische Transmission so zu wählen, sodass sich dadurch eine möglichst gleichgroße Lichtschwächung wie bei den Polarisierenden Domänen ergibt.

Im einfachsten Fall sind gebräuchliche Neutralfilter mit entsprechender optischer Dichte als Folienmaterial zu diesem Zweck einsetzbar und können in Verbindung mit den Polarisationsfolien zu einem POE entsprechend appliziert werden.

In den Lichtweg bzw. Strahlengang nach dem Polarisations-Optischen-Element POE sind gemäß Fig. 3 mindestens zwei weitere Optische Funktionselemente in jeweils bevorzugter Anzahl, Anordnung und Kombination nachgeschaltet. Dies sind einerseits sogenannte Optische Modulator-Elemente (OME) und andererseits sogenannte Strukturierte Retarder-Elemente (Retardereinheit, SRE) deren Funktion bereits zuvor beschrieben wurde. Die OMEi dienen demzufolge als Lichtmodulatoren zum Zwecke der Bildmodulation in den besagten DO, wobei die Lichtmodulation mittels entsprechender Energiebeaufschlagung Ei auf das betreffende OME bewirkt wird. Die spezifizierte Energiebeaufschlagung ist dann mit Hilfe der Steuersignale VMi ansteuerbar. Eine diesbezügliche Lichtmodulation wird jedoch ausschließlich auf die polarisierten Strahlanteile bzw. polarisierten Leuchtfeldbereiche selektiv wirksam, während die unpolarisierten Strahlanteile bzw. Leuchtfeldbereiche keine irgendwie gearteten Lichtmodulation unterliegen, sodass an diesen dafür eigens ausgewiesenen Stellen innerhalb eines betreffenden Leuchtfeldes in Verbindung mit einem Darstellenden Objekt DO weder irgendwelche Optischen Effekte noch irgendeine Bildmodulation beobachtbar ist. Eine Beleuchtungsvorrichtung kann demnach mehrere OME parallel und/oder in Serie enthalten, welche sich beispielsweise in modularer Form entsprechend den gegebenen Erfordernissen in jeweils gewünschter Anordnung gegebenenfalls jederzeit in den Lichtweg einbringen oder wieder entfernen lassen. Da jedes einzelne OME durch die betreffendenden Steuersignale VM jeweils individuell ansteuerbar ist, lassen sich durch die gezielte Nutzung mehrerer Steuersignale dadurch äußerst komplexe Lichtmodulationen bzw. Bildmodulationen inszenieren. Praktisch lassen sich derartige OME insbesondere in Form von elektronisch ansteuerbaren LC-Zellen anwenden (sog. ECB-Zellen, electrically controllable birefringence), welche in unterschiedlichen Varianten und Ausführungen auf dem Markt verfügbar sind. Bevorzugt können sog. Twisted Nematic Cells (TNC) verschiedener Hersteller verwendet werden (z. B. Fa. Optrel, Fa. Optrec).

Gemäß Fig. 3 können in den Lichtweg der BV zusätzlich zu den POE und OME noch weitere sog. Strukturierte Retarder Elemente SRE in jeweils gewünschter Anzahl und Anordnung und in entsprechender Zuordnung zu den diesbezüglichen OME eingebracht werden. Jedes dieser zuvor beschriebenen SRE kann dabei entweder aus einer einzelnen Schicht bestehen, welche mithin eine vorbestimmte lokal adressierte Retardanz Γ(x,y) besitzt, oder aber aus mehreren hintereinander geschalteten geschichteten Strukturen bestehen, welche jeweils ein eigenständiges Motiv hinsichtlich des optischen Gangunterschiedes Γi(x,y) sowie bestimmte jeweils bevorzugte axiale Richtungen aufweisen können.

Wie bereits zuvor dargestellt, ergibt sich die besagte optische Funktion des kombinierten Polarisationsoptischen Systems aufgrund des lichtoptischen Zusammenwirkens der jeweils räumlich voneinander getrennten Beleuchtungsvorrichtung BV mitsamt den Elementen POE, OME und SRE einerseits und den betreffenden Darstellenden Objekten DO mit ihren darin enthaltenen POB sowie dem diesbezüglich zugeordneten Analysator PE andererseits, wobei sowohl die SRE innerhalb der BV als auch die POB innerhalb eines DO jeweils durch vorbestimmte und bildmäßig entsprechend strukturierte optische Gangunterschiede gekennzeichnet sind. Somit werden die jeweils erst in einem betreffendenden DO visualisierten optischen Effekte insgesamt durch die zwei verschiedene sowie räumlich und funktionell voneinander getrennte Beiträge bestimmt, und zwar auf die Weise, dass sich der erste Beitrag beim Durchlaufen des Lichtstrahls innerhalb der BV durch das POE und einer bestimmten Anzahl entsprechend gestalteter SRE in Verbindung mit den jeweils zugeordneten OME ergibt und der zweite Beitrag nach einer entsprechenden Luftstrecke oder einem transparenten und isotropen anderen Medium, erst beim weiteren Durchlaufen des Lichtstrahls durch die betreffenden POB innerhalb der DO zustande kommt, sodass sich dadurch ein resultierender und somit letztlich bildbestimmender effektiver optischer Gangunterschied ergibt, welcher sich von Fall zu Fall entweder durch Addition oder Subtraktion der Gangunterschiede bzgl. der jeweiligen einzelnen lokalen Beiträge zusammensetzt. Die jeweils aktuell in Verbindung mit dem DO erscheinende Bildinformation BI und diesbezügliche Farbpalette wird außerdem noch durch den jeweils vorherrschenden lokalen Polarisationszustand, der axialen Richtung sowie vom Licht-Eintrittswinkel ab, sodass auch diese Parameter seitens der BV in gewünschter Weise noch zusätzlich variiert werden können. Diese räumliche und funktionelle Trennung der BV von den betreffenden DO ist somit mit eine Reihe von Vorteilen verbunden. Einerseits bleibt die gesamte von der BV ausgehende sichtbare Lichtqualität des Ausgangsstrahls Sout auch im Fall eines Zuschaltens bzw. Wechsels der transparenten SRE und oder der POE und/oder der OME sowie unter allen Modulationsverhältnissen praktisch unverändert, da alle optischen Effekte erst mit Hilfe des betreffenden Polarisierenden Elementes PE und ausschließlich nur im Zusammenhang und lichtoptischen Zusammenwirken mit einem entsprechend spezifizierten DO sowie an den dafür ausgewiesenen entsprechenden Leuchtfeldbereichen selektiv sichtbar gemacht werden. Aufgrund dieser funktionellen Trennung kommen der BV demnach alle aktiven Funktionen zur Bildmodifikation und Bildmodulation zu, deren lichtoptische Wirkungen auf das von der BV ausgestrahlte Licht hingegen stets unsichtbar bleiben.

Zur Visualisierung der jeweils aus getrennten Beiträgen resultierenden Optischen Effekte dienen die besagten DO, welche vornehmlich als passive Optische Elemente ausgebildet sind. Der Sinn der räumlichen und funktionellen Trennung zwischen den SRE und OME und den meist fest installierten bzw. durch vorbestimmte latente Bildmotive der POB weitgehend unveränderbaren Darstellenden Objekten ist in dem anwendungsbedingten Vorteil zu sehen, dass lediglich innerhalb der Beleuchtungsvorrichtung BV nur einzelne leicht zugängige optische Komponenten und außerdem mit geringen Abmessungen einfach gewechselt oder ausgetauscht werden können, (wobei z. B. ein Vielzahl unterschiedlicher und entsprechend konfektionierter SRE beispielsweise in einer Wechsler-Vorrichtung Verwendung finden können) sodass dadurch jederzeit eine Modifikation und Variation der Optischen Effekte in den DO bewirkt werden kann, ohne die DO jedoch selbst verändern zu müssen. Es obliegt somit dem Anwender, durch entsprechende Auswahl und Anordnung der SRE und durch ihre jeweilige Zuordnung zu den betreffenden OME die jeweils gewünschten Bildmotive sowie ihre diesbezüglichen Farbpaletten in Verbindung mit entsprechenden DO frei zu gestalten.

Die Fig. 3 zeigt außerdem die Möglichkeit eine betreffende BV mit zusätzlichen Optischen Elementen OE zu versehen, welche zur entsprechenden Lichtführung bzw. zur gezielten Beeinflussung des Lichtstrahls (Bündelung, Ablenkung etc.) bzw. zur definierten Leuchtfeld Projektion bzw. zur optischen Abbildung dienen können. Hierzu können in die BV die üblichen Optischen Elemente z. B. Optische Spiegel (OE1) und/oder Kondensorlinsen (OE2) und /oder Objektive (OE3) u.a. in den Strahlengang entsprechend eingebracht werden.

Ein Ausführungsbeispiel der Erfindung beinhaltet ein Optisches Modulator-Element OME bzw. ein aktiv ansteuerbares Strukturiertes Retarder Element SRE.

Das Beispiel soll für den Fall dargestellt werden, dass auf eine entsprechend ausgebildete Flüssigkristallschicht bzw. LC-Zelle die besagte Energiebeaufschlagung in Form von Schallenergien mittels entsprechender und durch betreffende Steuersignale ansteuerbare Applikatoren erfolgen soll und das im Folgenden als Akusto-Optisches-Modulator-Element (AOME) bezeichnet wird, wobei einerseits dadurch ein definiertes Schallfeld oder aber mehrere miteinander interferierende Schallfelder bzw. Ultraschallfelder in einer Flüssigkristall-Schicht bzw. in einem entsprechenden Lumen erzeugt werden. Allgemein bekannt ist, dass z. B. in Flüssigkristallen bestimmte Akusto-Optische Effekte generiert werden können (Chatri Sripaipan et al. Physical Review, Vol 15, Nr.3, March 1977), insbesondere, dass die betreffende LC-Schicht bei entsprechender Beaufschlagung mit US-Wellen hierbei doppelbrechende Eigenschaften zeigt, wobei die LC jeweils bestimmte Orientierungen annehmen. Dies führt somit zu schallinduzierten und gezielt abstimmbaren bzw. dynamisch ansteuerbaren optisch anisotropen Musterbildungen innerhalb der LC-Elemente. Die akusto-optisch induzierten Phasenstrukturen können demzufolge entweder als OME oder als aktiv ansteuerbare SRE genutzt werden, wobei die betreffenden auf akusto-optischem Wege gezielt anregbaren dynamischen Strukturbildenden Optischen Effekte mittels entsprechender Steuersignale ebenso dynamisch modulierbar sind. Als Applikatoren können einerseits alle diesbezüglich geeigneten elektrischen Schallwandler bzw. Ultraschallwandler verwendet werden, wobei die betreffenden Schallfelder mit Hilfe bekannter Mittel und Koppelmedien in die LC-Schicht entsprechend eingekoppelt werden.

Möglich ist außerdem der Einsatz einer oder mehrerer sog. PhotoAkustischer Applikatoren auf entsprechend ausgewiesene lokale Bereiche der LC-Schicht. Hierbei werden sog. Photoakustische Effekte in einer betreffenden LC-Schicht ausgenutzt, indem zur Anregung akustischer Wellen einer jeweils gewünschten Frequenz eine entsprechend gezielte Einstrahlung mittels einer diesbezüglichen sowie jeweils entsprechend modulierten Strahlungsintensität mit der betreffenden Frequenz auf die LC-Schicht erfolgt. Die jeweils gewünschte Strahlungs-Applikation kann außerdem mittels eines oder mehrerer externer und entsprechend modulierbarer Strahler auch auf kontaktlosem Wege erfolgen. Darüber hinaus kann es vorteilhaft sein, wenn die elektromagnetische Strahlung zur photo-akustischen Anregung dabei außerhalb des sichtbaren Spektralbereiches liegt (z. B. IR-Strahlung, Mikrowellen-Strahlung, UV-Strahlung u.v.a.m.). Somit lässt sich mittels einer entsprechenden Strahlerkombination und Strahlführung das betreffende LC-Feld ebenso auf eine geeignete Weise beaufschlagen, ohne dass dabei ein sichtbarer Einfluss auf die von der BV ausgehenden Beleuchtung Sout auftritt. Dem Fachmann auf diesem Gebiet sind einschlägige Verfahren bekannt, welche eine entsprechende Photoakustische Anregung von LC Schichten erlauben, wodurch sich dann wiederum die nachfolgenden die besagten Akusto-Optischen Effekte erzeugen lassen.

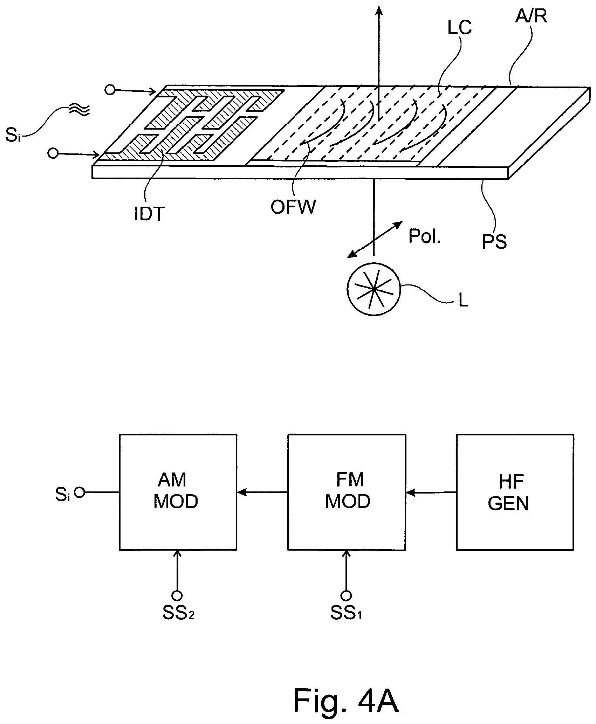

Fig. 4A zeigt ein besonderes Ausführungsbeispiel eines AOME in Form eines durch sog. Akustische Oberflächenwellen beaufschlagtes LC-Element als Prinzip-Skizze.

In dieser Vorrichtung wird das Akusto-optische Prinzip zur gezielten Erzeugung und Modulation von strukturbildenden optischen Phänomenen mit doppelbrechenden Eigenschaften genutzt, wobei nunmehr die AOME jeweils innerhalb einer Beleuchtungsvorrichtung BV anstelle der OME bzw. SRE in den Lichtweg eingebracht werden.

In Fig. 4A ist das Prinzip eines AOME skizziert, wobei auf einem Piezoelektrischem Substrat PS mit Hilfe eines Interdigital-Wandlers (Interdigital Transducer IDT) in einer LC Schicht (LC) Akustische OberflächenWellen OFW erzeugt werden, welche innerhalb des LC zu den besagten Akusto-Optischen Effekten führen. Die OFW können mittels eines Absorbers entweder entsprechend abgeschwächt werden (sog. Akustischer Sumpf) oder gegebenenfalls mittels eines Reflektors R entsprechend reflektiert werden, um z. B. dadurch stehende akustische Wellenfelder zu erzeugen.

Die Akustischen Oberflächenwellen OFW werden durch das Signal Si mit einer geeigneten Grundfrequenz (z. B. im Mhz-Bereich) mittels entsprechender Interdigital Wandler (Interdigital Transducer, IDT) bei transmissiver Anwendung auf einem lichtdurchlässigen bzw. bei reflexiver Anwendung auf einem lichtreflektierenden piezoelektrischen Trägermaterial (PS) generiert. Die auf dem Träger PS aufgebrachte Flüssigkristall-Schicht (LC) einer geeigneten Schichtdicke (im Mikrometer Bereich) können mit Hilfe bekannter Mittel (z. B. Tenside oder Orientierungsschicht) entsprechend den Maßgaben des Anwenders vororientiert werden, sodass sich die LC-Schicht durch eine jeweils bevorzugte strukturierte optische Anisotropie auszeichnet, wobei das von der Lichtquelle (L) ausgehende und entsprechend polarisierte Licht (Pol.) im Sinne der mittels des betreffenden IDT angeregten sowie durch das Signal Si steuerbaren optisch anisotropen Strukturen entsprechend moduliert werden kann. Das Signal Si, welches zur Anregung und Steuerung der Musterbildung dient wird zunächst von einem HF-Generator mit variierbarer Amplitude und Frequenz erzeugt. Mittels eines nachgeschalteten Frequenz-Modulators (FM MOD) wird um eine jeweils vorbestimmte Grundfrequenz z. B. im Bereich von 500 kHz bis 10 MHz ein durch das niederfrequente Steuersignal SS1 modulierbares frequenzmoduliertes Signal erzeugt. Die betreffende Wahl der Grundfrequenz sowie des Frequenzhubes ergibt sich aus den betreffenden Wellenlängen der jeweils zu induzierenden Akustischen Wellenfelder und richtet sich wiederum nach den anwendungsspezifischen Maßgaben, wobei die diesbezügliche Schallfrequenz resp. Wellenlänge die jeweils gewünschten Moden der Musterbildung in Sinne einer gezielten und dynamisch steuerbaren Ortsfrequenz -Variation der betreffenden doppelbrechenden Musterdomänen (z. B. Gitterkonstante des Phasengitters) determiniert. Mit Hilfe der nachgeschalteten Amplitudenmodulation (AM MOD) kann durch ein zusätzliches niederfrequentes Steuersignal auch die applizierte Schallintensität gezielt angesteuert werden, wobei die jeweils bevorzugten Schallintensitäten sowie der Modulationsgrad wiederum durch die anwendungsspezifischen Maßgaben zur Erzielung der gewünschten Akusto-Optischen Effekte bestimmt werden.

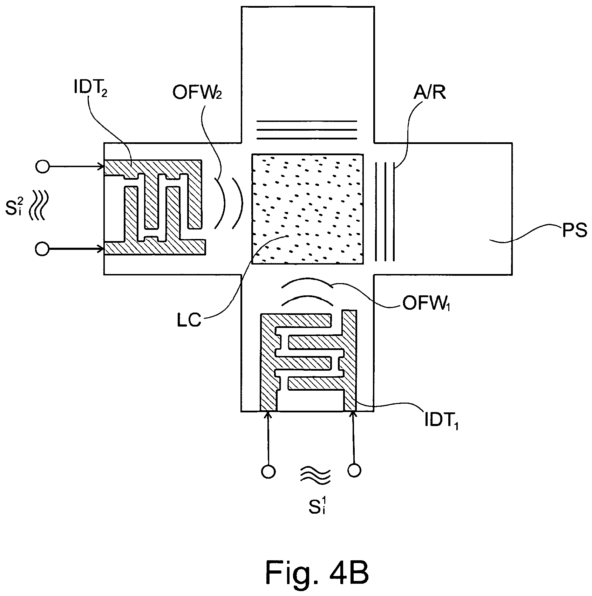

In Fig. 4B wird das Prinzip für ein besonderes Ausführungsbeispiel für ein AOME angegeben, welche auf einem Substrat PS zwei Interdigitalwandler IDT1; IDT2 aufweist.

Der Vorteil dieses Anwendungsbeispiels ist darin zu sehen, dass in diesem Fall zwei akustische Wellenfelder innerhalb der LC-Schicht miteinander interferieren, sodass mit Hilfe der Signale Si, 1 und Si,2 eine gezielte Steuerung des jeweils resultierenden Interferenzfeldes und damit der sich daraus ergebenden lokalen Wirkungen auf die optisch anisotrope Strukturbildung in den entsprechenden LC-Domänen ermöglicht wird. Beispielsweise lässt sich durch die komplentäre dynamische Steuerung der beiden Schallintensitäten mittels der beiden diesbezüglichen Amplituden-Modulatoren AM MOD die Ortsbeziehungen der lokalen Interferenzvektoren des zweidimensionalen Schallfeldes und damit auch die optischen Effekte auch ortsabhängig gezielt variieren bzw. eine Musterbildung mit einer entsprechenden Dynamik der Anregungsorte erzielen (Anregungsort-Dynamik). Darüber hinaus lassen sich die mustererzeugenden akusto-optischen Determinanten hinsichtlich der Ortsfrequenz spezifischen Musterbildung außerdem mit Hilfe der jeweils miteinander in gewünschter Weise miteinander korrelierbaren Schallfrequenzen sowie deren Frequenzmodulationen mit der die beiden IDT jeweils angesteuert werden, auf stationäre bzw. dynamische Weise beeinflussen (Ortsfrequenz-Dynamik). Durch entsprechende Kombination und Korrelation der betreffenden und diesbezüglich implementierten HF-Generatoren, Amplitudenmodulationen sowie Frequenzmodulationen lassen sich somit äußerst komplexe Musterbildungsprozesse und optische Effekte nach der jeweiligen Intention des Anwenders realisieren. Es obliegt somit dem Anwender aufgrund der explizit oder implizit in dieser Schrift enthaltenen Lehre dadurch weitere Ausführungsformen und künftige Varianten der AOME zu erstellen, und einzusetzen. Denkbar ist in diesem Zusammenhang auch die Ausführung von AOME unter Einsatz einer größeren Anzahl von photoakustischen Applikatoren bzw. von verschiedenen elektro-akustischen Wandlertypen oder deren Kombination.

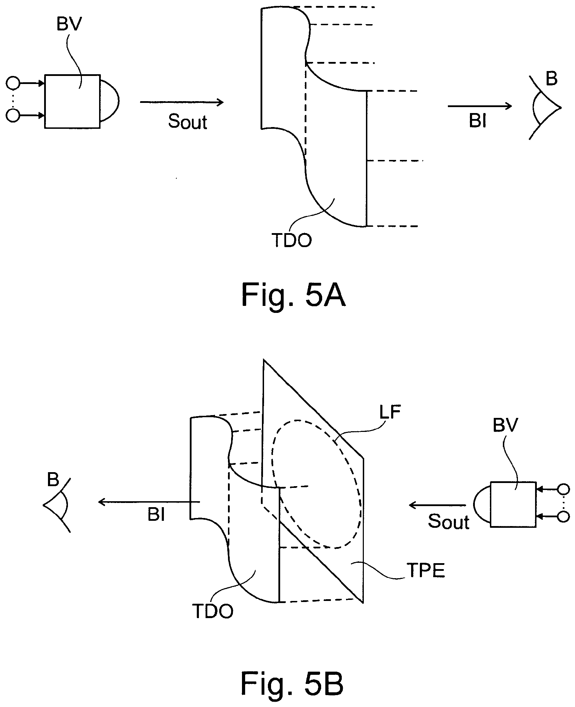

Die Fig. 5A bis 5E zeigen fünf verschiedene Ausführungsvarianten hinsichtlich einer direkten bzw. indirekten Ausleuchtung mittels Aufprojektion respektive Rückprojektion der von der Beleuchtungsvorrichtung BV ausgehenden Beleuchtung, welche auf ein diesbezügliches Darstellendes Objekt DO trifft und das wahlweise in lichtdurchlässiger (TDO) bzw. lichtreflektierender (RDO) Zusammensetzung ausgebildet ist.

In Fig. 5A wird exemplarisch ein lichtdurchlässiges (transmissives) Darstellendes Objekt TDO schematisch dargestellt, welches hinsichtlich seines Aufbaus eine entsprechende interne Strukturierung z. B. gemäß den Fig. 1 und Fig. 2 besitzen kann, wobei u.a. mehrere entsprechend geschichtete Polarisationsoptische Elemente POB enthalten sein können, welche jeweils eine latente individuell gestaltete Bildinformation tragen. Die TDO können zudem in beliebiger Anzahl, Abmessung und in den jeweils gewünschten Formvarianten (z. B. als flächenhafte oder körperhafte planare oder gekrümmte Gebilde, sowie als Hohlkörper oder Vollkörper) in das von der Beleuchtungsvorrichtung BV ausgehende Leuchtfeld in jeder bevorzugten räumlichen Position eingebracht und ebenso in dem betreffenden Leuchtfeld bewegt werden. Ein von der BV ausgehender Ausgangsstrahl Sout scheint somit direkt durch das TDO hindurch, sodass ein auf der Rückseite des TDO befindlicher Beobachter B die in dem TDO in Verbindung mit den jeweils ausgeleuchteten Feldern erzeugte Bildinformation BI nur im Fall einer polarisierenden Visualisierung wahrnehmen kann. Für den ebenso intendierten Fall, dass der Ausgangsstrahl, aufgrund der in der BV enthaltenen Mittel, wahlweise insgesamt unpolarisiert ist, wird hingegen keinerlei sichtbare Bildinformation zustande kommen, sodass auch keinerlei diesbezügliche Optische Effekte beobachtet werden, wobei das TDO insgesamt vollständig transparent erscheint (sog. Neutral-Modus).

Die Fig. 5B zeigt beispielhaft die Ausführungsvariante einer Indirekten Transmissiven Rückprojektion unter Einsatz eines ebenfalls lichtdurchlässigen TDO. Diese Anordnung weist im Unterschied zu 5A ein zusätzlich zwischen der BV und dem TDO eingebrachtes sog. Transluzides Projektions-Element TPE auf, wobei durch Rückprojektion ein entsprechendes Leuchtfeld entsteht, dass jedem nachgeschalteten TDO als diesbezügliche Hintergrundbeleuchtung dient, wobei auch das TPE in ähnlicher Weise wie das TDO in frei verfügbarer Form und Dimensionierung ausgeführt werden kann und vorzugsweise an die durch die jeweils eingesetzten TDO vorbestimmten Verhältnisse entsprechend angepasst werden kann. Um seine Funktion zu gewährleisten muss ein derartiges TPE jedoch die essentielle Bedingung erfüllen, dass das betreffende Material mit dem das TPE ausgeführt wird, sich insbesondere durch seine polarisationserhaltenden Eigenschaften auszeichnet, sodass das mittels Rückprojektion durch das TPE hindurchtretende und jeweils entsprechend polarisierte Licht ebenso wie auch das betreffende Hintergrund-Leuchtfeld für das nachgelagerte TDO seinen jeweiligen Polarisationszustand weitgehend unverändert beibehält. Ansonsten können zur Ausführung der TPE alle Materialien eingesetzt werden, welche die jeweils gewünschte Charakteristik hinsichtlich der Lichtdurchlässigkeit (Transmission und Streuung) sowie Lichtlenkung (Projektionswinkel, Betrachtungswinkel) aufweisen. Die besagte Bildinformation BI bzw. Optischen Effekte können dann vom Beobachter B auf der Vorderseite des TDO vor dem betreffenden Hintergrund-Leuchtfeld LF betrachtet werden. Nach gewonnener Erfahrung, können als TPE-Materialien vorteilhaft z. B. optisch opake Rückprojektions-Folienmaterialien der Fa. LogoFilm erfolgreich eingesetzt werden, welche hinreichend polarisationserhaltend sind und aufgrund ihrer diesbezüglichen Charakteristik außerdem sogar unter Tageslichtbedingungen eine sehr kontrastreiche sowie weitgehend vom umgebenden Störlicht unbeeinflusste Beobachtung der Optischen Effekte in den TDO sowie über einen großen Beobachtungswinkel hinweg, ermöglicht. Nach dem Umschalten von der polarisierenden Visualisierung in den Neutral-Modus seitens der BV erscheint das TDO wiederum völlig transparent und vor einem vornehmlich mit Weißlicht homogen ausgeleuchteten Hintergrund.

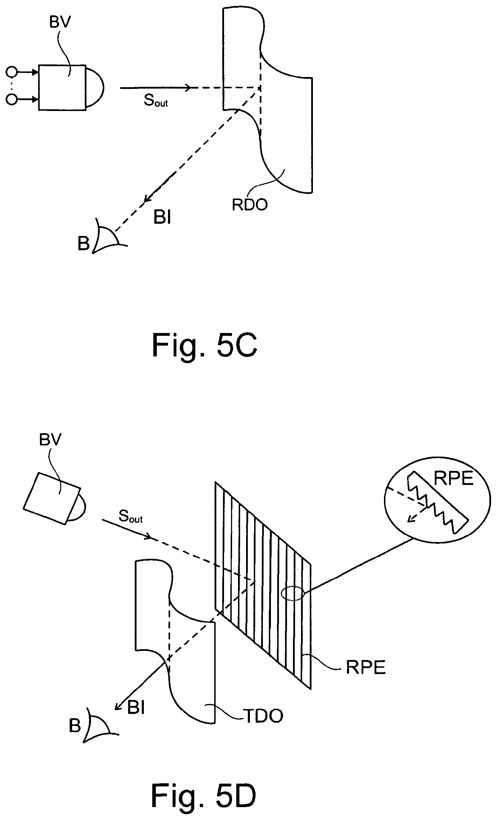

Die Fig. 5C zeigt schematisch ein Ausführungsbeispiel für den Fall einer direkten Aufprojektion auf ein Reflexives Darstellendes Objekt RDO. Bei dieser Ausführungsvariante trifft das von der BV ausgehende Licht Sout auf ein Darstellendes Objekt in reflektierender Anordnung RDO, wobei die interne Struktur u.a. mindestens ein oder mehrere entsprechend ausgebildete und entsprechend parallel und/oder seriell als geschichtete POB enthalten kann, welche jeweils eine latente Bildinformation besitzen. Das mittels der BV eingestrahlte Licht durchläuft somit alle diesbezüglichen POB und trifft anschließend auf ein optisch entsprechend angekoppeltes Polarisierendes Element PE, welches in diesem Fall als Reflektierender Analysator dient, wobei das Licht an der Analysatoroberfläche gemäß der Polarisationsrichtung des Analysators entsprechend reflektiert wird und somit die Bildinformation BI enthält, welche im besagten Fall einer polarisierenden Visualisierung vom Beobachter B wahrgenommen werden kann. Im Fall des wahlweise im Neutral-Modus betriebenen Zustandes erscheinen in den RDO wiederum keinerlei Optische Effekte, sodass ausschließlich die vorzugsweise homogene und diffus reflektierende Oberfläche des PE durch die vorgelagerten transparenten Schichten hindurchscheint. Aufgrund der gewonnenen Erkenntnis lassen sich als betreffende reflektierende PE, welche sich sowohl durch ihre polarisierende als auch durch ihre reflektierenden Charakteristika in bestimmter Weise auszeichnen, vorteilhaft die gängigen diffus reflektierenden und zugleich polarisierenden Folienmaterialien verschiedener Hersteller einsetzen (z. B. 3M, Vikuiti, Polatech, Nitto Denko etc.) Diese Folienmaterialen lassen sich außerdem auf einfache Weise auf die diesbezüglichen optischen Elemente auflaminieren, sodass sich die besagten Optischen Effekte unter Frontalansicht und bei Aufprojektion über einen großen Projektionswinkel sowie Sichtwinkel-Bereich mit großer Helligkeit, hohem Kontrast und mit brillanter Farbwiedergabe beobachten lassen, bei ebenfalls hinreichender Unempfindlichkeit gegenüber dem umgebenden Störlicht.

Die Fig. 5D zeigt eine weitere Variante in Form einer indirekten sowie reflexiven Rückprojektion als Schemazeichnung unter Einsatz mindestens eines lichtdurchlässigen Transmissiven Darstellenden Objekts TDO in Kombination mit mindestens einem sog. Reflexiven Projektions-Element RPE. Hierbei trifft ein von der Beleuchtungsvorrichtung BV ausgehender Lichtstrahl Sout unter einem geeigneten Projektionswinkel zunächst auf ein entsprechend ausgebildetes RPE. Dieses RPE fungiert dabei als polarisationserhaltender sowie als entsprechend angeordneter sowie mit einer bestimmten Oberfläche behafteter

Lichtreflektor, welcher eine jeweils gewünschte Reflexionscharakteristik aufweist, sodass das von dem RPE entsprechend reflektierte Licht in der beabsichtigten Weise durch ein betreffendes TDO hindurchtritt, wobei die von dem TDO ausgehende sichtbare Bildinformation BI vom Beobachter B wahrgenommen werden kann. Je nach dem gewählten Projektionswinkel des eingestrahlten Lichts in Verbindung mit den durch die betreffende Reflexionscharakteristik des RPE jeweils bewirkten Reflexionswinkel bzw. Sichtwinkel-Bereichen, ist demzufolge ein bestimmter räumlicher Abstand zwischen dem RPE und dem TDO erforderlich. Das von dem RPE ausgehende Reflektor-Leuchtfeld dient demnach wiederum als Hintergrund-Leuchtfeld zur Beobachtung der besagten Optischen Effekte beim Durchblick durch ein betreffendes TDO. Um der polarisationserhaltenden Bedingung zu genügen, lassen sich die RPE vornehmlich mit metallischen Oberflächen ausrüsten. Zum Zwecke der Erzielung einer gewünschten Reflexionscharakteristik mit der das eingestrahlte Licht gemäß einer bestimmten Vorzugsrichtung reflektiert und/oder mehr oder weniger diffus gestreut werden soll, kann die diesbezügliche Oberfläche außerdem mit einer bestimmten Oberflächenbeschaffenheit und Oberflächenstruktur versehen werden (z. B. bestimmte reflexive und/oder streuende Reliefstrukturen, Mikroprismenstrukturen, Gitterstrukturen u.v.a.m.). Die Fig. 5D zeigt hierzu den Detailausschnitt für ein Ausführungsbeispiel zur zum Zwecke der Lichtlenkung mittels einer gerichteten Reflexion an einer entsprechend ausgebildeten Oberflächenstruktur, wozu entsprechend linierte halbprismatische Mikro-Reliefs in der Weise angeordnet sind, dass das unter einem bestimmten flachen Einstrahlwinkel eingestrahlte Licht vorwiegend senkrecht zur RPE-Oberfläche reflektiert wird. Mit Hilfe der zusätzlich mattierten Metallischen Oberfläche weist diese Oberfläche neben der Reflexion außerdem noch einen bestimmten Streuanteil auf, wodurch die Sichtbarkeit der Optischen Effekte sowie der nutzbare Sichtwinkelbereich noch zusätzlich verbessert werden kann.

Zur Herstellung von RPE lassen sich auch eine Vielzahl marktgängiger Kunststoff Folienmaterialien nutzen, welche z. B. zum Zwecke der Lichtleitung bei LCD-Bildschirmen bzw. bei verschieden Leuchtenkonstruktionen Verwendung finden (z. B. Fa. 3M;Vikuiti etc.). Für den Fall, dass es diesen gängigen Folienmaterialien lediglich an der hierbei geforderten polarisationserhaltenden Eigenschaften mangeln sollte, lassen sich diese Folien auch noch zusätzlich mit einer metallischen Oberfläche entsprechend beschichten. Ebenso können auch metallische Werkstoffe mittels bekannter Verfahren in der Weise bearbeitet werden, dass dadurch eine gewünschte Strukturierung und Oberflächenbeschaffenheit hergestellt wird.

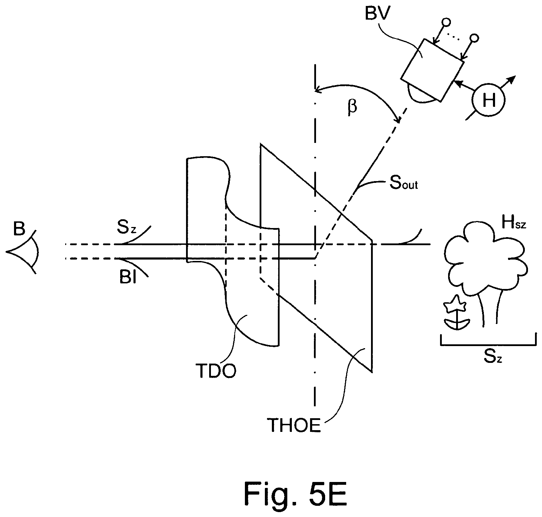

Eine weitere Ausführungsvariante wird schematisch in Fig. 5E dargestellt, welche im Unterschied zu den zuvor gezeigten Versionen 5A bis 5D nunmehr eine visuelle Überlagerung zweier unterschiedlicher Bildquellen (sog. Overlayfunktion) beinhaltet. Diese zusätzliche optische Funktion gestattet beispielsweise die Betrachtung einer betreffenden Realszene Sz bzw. einer virtuellen Szene anhand sonstiger diesbezüglicher Abbildungen aus beliebigen Bildmedien (z. B. Display, Video- bzw. Filmprojektion etc.) durch die beiden hintereinander angeordneten und jeweils transparenten optischen Elemente TDO und THOE, wobei sich die besondere Möglichkeit ergibt, dass die jeweils dabei beobachtete Realszene Sz gleichzeitig mit den besagten Optischen Effekten optisch überlagert werden kann, welche gegebenenfalls mittels der BV innerhalb der TDO erzeugt werden. Das zu diesem Zweck in Verbindung mit dem TDO entsprechend angeordnete Transmissive Holographische Element THOE zeichnet sich hinsichtlich seiner optischen Funktion im Allgemeinen dadurch aus, dass dieses Element bei frontaler Betrachtung einerseits als praktisch transparentes Fenster für eine dahinterliegende visuelle Szenerie dient und anderseits durch eine zusätzlich auf das THOE ausgerichtete Rückprojektion mittels der BV unter einem jeweils definierten Einstrahlwinkel β mit dieser jeweils betrachteten Szenerie auf bestimmte Weise überlagert werden kann. Dass jeweilige Maß der optischen Überlagerung hängt somit von dem betreffenden Verhältnis der diesbezüglich vorherrschenden Helligkeiten der beiden Beiträge zueinander ab. Aus diesem Grund kann das betreffende Maß der Überlagerung durch die Helligkeit H seitens der BV an die betreffende Helligkeit Hsz der Szene Sz jeweils reziprok zueinander in gewünschter Weise individuell abgestimmt werden. Für die beiden Sonderfälle, dass a. entweder die Szenerie Sz im Dunkeln bleibt oder dass b. keine diesbezügliche Rückprojektion erfolgt (d.h. H=0), erscheint beim Durchblick durch das THOE im Fall a. demnach entweder nur die Projektion oder im Fall b. nur die Szene selbst.

Derartige, auf der Anwendung holographischer Gitter basierende THOE sind als sog. Holographische Optische Projektions-Scheiben (HOPS) der Fa. SAX3D erhältlich. Der Vorteil des Einsatzes dieser optisch transparenten Holographischer Elemente besteht darin, dass diese Elemente prinzipbedingt einerseits die geforderte polarisationserhaltende Eigenschaft aufweisen und andererseits darin, dass die unter polarisierender Visualisierung zustande kommenden besagten Optischen Effekte durch das in der Regel unpolarisierte Umgebungs- bzw. Störlicht kaum beeinflusst werden, sodass dadurch eine äußerst kontrastreiche und brillante Darstellung auch in einer Umgebung mit großer Helligkeit ermöglicht wird. Ein zusätzlicher Vorteil für die betreffenden Anwendungen ergibt sich auch dadurch, dass nunmehr auch unter den für eine derartige Projektion in der Regel denkbar ungünstigen Bedingungen z. B. sogar bei hellem Tageslicht bzw. unter direkt auf das THOE gerichtetem Scheinwerferlicht eine exzellente Wiedergabe der besagten optischen Effekte ermöglicht wird. Der letztgenannte Vorteil kommt vor allem dadurch zustande, dass der aus der BV austretende Ausgangsstrahl Sout jeweils nur mit einem genau definierten und begrenzten Einstrahlwinkels β auf die Rückseite des THOE projiziert wird und dann mittels der diesbezüglich spezifisch ausgebildeten und jeweils genau für diesen Winkel abgestimmten holographischen Gitterstruktur des THOE senkrecht zu dessen Oberfläche in die Richtung des Beobachter B gelenkt wird, und nach dem Durchtritt durch das nachgeschaltete TDO dadurch die Visualisierung der gewünschte Bildinformation BI bewirkt. Da zur Erzeugung der besagten Optischen Effekte in Verbindung mit dem betreffenden TDO ausschließlich der von der BV ausgehende Projektionsstrahl Sout wirksam ist, beeinträchtigen in der Regel demnach alle sonstigen Lichtquellen, welche nicht von der BV ausgehen, die Wiedergabequalität der besagten Optischen Effekte erheblich. Dieser Nachteil wird durch den Einsatz der THOE dadurch weitgehend vermieden, dass in diesem Sonderfall jedwedes und aus allen anderen Winkeln eintreffendes Störlicht bzw. Umgebungslicht, welches üblicherweise außerdem unpolarisiert ist, in dem Element selbst weder auf irgendeine Art gestreut oder gebeugt wird, und somit durch das transparente THOE hindurchscheint. Da sowohl das THOE als auch das TDO jeweils transparent sind und somit auch praktisch keinerlei sichtbare interne Strukturierung aufweisen, erscheinen im Fall einer polarisierenden Visualisierung der Optischen Effekte sowohl die von dem TDO ausgehenden Bildinformation BI als auch die jeweilige Szene Sz für den Beobachter B in Form einer entsprechenden visuellen Überlagerung. Durch eine entsprechend abgestimmte Helligkeitseinstellung des Projektionslichtes seitens der BV mittels des Reglers H im jeweiligen Bezug zur Helligkeit Hsz der Szene, kann das Maß der jeweils erscheinenden optischen Überlagerung gewünschter Weise abgestimmt werden. Für den Fall, dass die Szene Sz eine Realszene betrifft, kann auch die betreffende Helligkeit Hsz mittels einer zusätzlichen und entsprechend dimmbaren Beleuchtung noch in gewünschter Weise variiert werden. In den anderen Fällen, dass z. B. anstelle einer realen Szene eine virtuelle Szene aufgrund einer betreffenden Bildprojektion oder Video Projektion auf einem diesbezüglichen Display oder Schirm erzeugt werden soll, lässt sich auch bei dem jeweils eingesetzten Medium hierbei die Helligkeit Hsz dementsprechend einstellen. Durch die gezielte dynamische Steuerung der betreffenden Helligkeiten H(t), Hsz(t) zueinander lassen sich demnach optional weitere effektvolle Gestaltungsmöglichkeiten schaffen, wobei sich mittels dieser besonderen Ausführungsvariante zusätzlich zu den jeweils bisher erzielbaren besagten Optischen Effekten in diesem Fall auch noch das jeweilige Maß der Transparenz sowie die jeweiligen Kontrastverhältnisse bei der betreffenden Inszenierung dynamisch variieren lassen. Im Fall des gewählten Neutral-Modus, d.h. unter Projektion eines von der BV ausgehenden und somit gänzlich unpolarisiertem Licht, erscheint ein diesbezügliches Leuchtfeld demnach, wie zuvor dargestellt, ohne irgendwelche optischen Effekte, wobei das betreffende Leuchtfeld bei entsprechend abgestimmten Helligkeiten (d.h. H der von der BV ausgehenden Lichtprojektion in Verbindung mit der Hsz der Szene Sz) in der Weise optisch überlagert ist, sodass beim Beobachter B dadurch der visuelle Eindruck wie beim Durchblick durch eine mehr oder minder opake und ausgeleuchtete Scheibe hervorgerufen wird. Hinsichtlich der beiden Extremfälle a. (H>>0 ; HSz=0) bzw. b. (H=0 ; HSz >>0) wird bei a. für das transparent erscheinende TPO ein völlig opakes Hintergrund-Leuchtfeld sichtbar, welches keinerlei Durchsicht auf die jeweils dahinter befindliche Szene Sz gestattet, wohingegen bei b. die beiden Elemente TPO und THOE gleichsam völlig transparent erscheinen und eine völlig klare Durchsicht auf die Szene Sz gestatten.

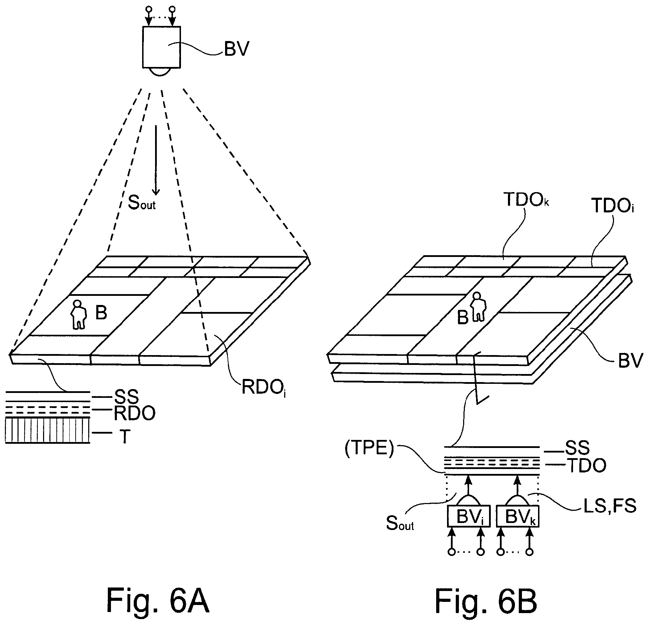

Die Fig. 6A und 6B zeigen schematisch ein weiteres Ausführungsbeispiel der Erfindung in Form von darstellenden Objekten, welche vornehmlich als Architekturelemente fungieren können und die sowohl als begehbare Bodenfliesen oder Bodenbeläge als auch für Wandpaneelen oder als Fassadenelemente u. ä. einsetzbar sind. Im Fall der Fig. 6A werden die dargestellten Fliesenelemente als Darstellende Objekte in reflexiver Zusammensetzung RDOi von dem Lichtstrahl Sout, welcher von einer externen Beleuchtungsvorrichtung BV ausgeht, entsprechend ausgeleuchtet, sodass der Beobachter B die erzeugten Optischen Effekte innerhalb jedes der RDOi beobachten kann. Diese Variante entspricht dem in Fig. 5C dargestellten Prinzip. Jedes einzelne als RDO ausgebildete Architekturelement enthält somit jeweils eine bestimmte Anzahl von POB mit entsprechen gestalteten Motiven. Darüber hinaus können die betreffenden RDO auf einem entsprechenden Trägermaterial T aufgebracht werden und ebenso kann auch die Oberfläche der RDO mit weiteren transparenten Schichten SS versehen werden, welche z. B. als Schutzschicht dienen oder entsprechend strukturierte Oberflächen -Profile oder entsprechende transparente Farbmotive bzw. bestimmte Einfärbungen enthalten können.

In der Fig. 6B wird ein Ausführungsbeispiel unter Verwendung von lichtdurchlässigen Architekturelementen dargestellt, welche jeweils in Form von entsprechend gestalteten TDO ausgeführt sind, wobei eine indirekte transmissive Rückprojektion gemäß der in Fig. 5B dargestellten prinzipiellen Anordnung erfolgt. In diesem Fall geht von den diesbezüglich eingesetzten Beleuchtungsvorrichtungen BVi...BVk jeweils ein Lichtstrahl Sout aus, welcher entweder durch eine Luftschicht LS oder durch eine geeignete transparente Füllschicht FS hindurchtritt, sodass auf dem nachfolgenden lichtdurchlässigen transmissiven Projektions-Element TPE ein betreffendes Leuchtfeld entsteht, welches somit als Hintergrundbeleuchtung für alle diesbezüglich eingebrachten TDO dient. Auf gleiche Weise, wie im Fall der Fig. 6A können die TDO außerdem noch mit zusätzlichen Schichten SS versehen werden. Bei polarisierender Visualisierung erscheinen wiederum die besagten Optischen Effekte in den betreffenden Architekturelementen, während beim Umschalten der BV in den Neutral-Modus die latente Bildinformation für den Beobachter B unsichtbar bleibt.

Weitere denkbare Ausführungsbeispiele für Architekturelemente entweder in reflexiver oder transmissiver Zusammensetzung in ganz unterschiedlichen Formen und Anordnungen können nach den in den Fig. 5A bis Fig. 5E dargestellten Prinzipien realisiert werden.

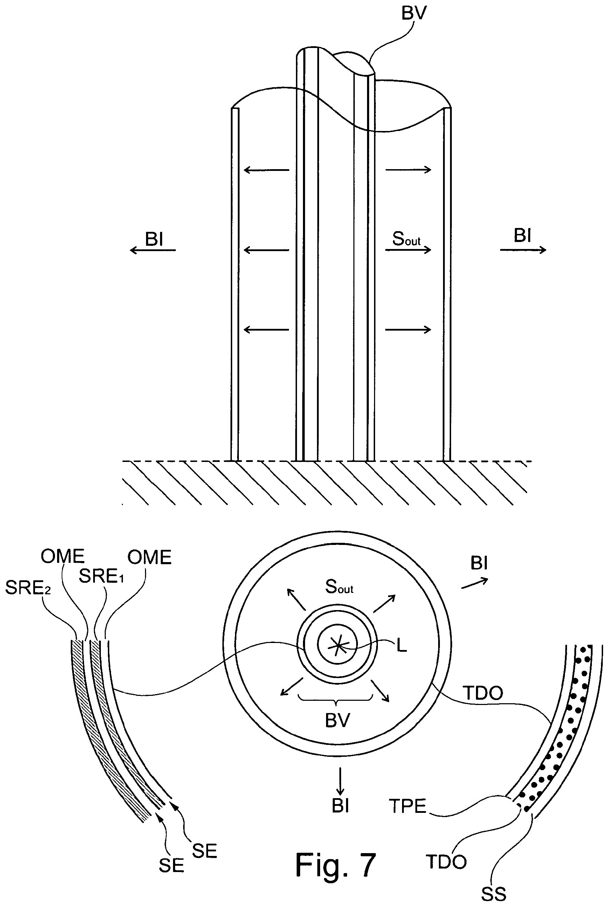

In Fig. 7 wird beispielhaft ein weiteres Architekturelement, Gebrauchsobjekt oder Leuchtenelement dargestellt, welches röhrenförmig ausgebildet sein kann und u.a. die betreffende BV und TDO in koaxialer zylindrischer Anordnung enthält. In diesem Fall wird wiederum das Prinzip der indirekten transmissiven Rückprojektion gemäß Fig. 5B entsprechend den vorliegenden Gegebenheiten umgesetzt. Das innere transparente Rohrelement enthält die Beleuchtungsvorrichtung BV und strahlt das Licht Sout in radialer Richtung ab, welches auf der Innenseite des äußeren zylindrischen Rohrelementes in dem TPE wiederum ein entsprechendes Leuchtfeld erzeugt, und das für das sich daran anschließende koaxiale zylindrische TDO somit als Hintergrundbeleuchtung dient, wobei von der Außenseite des TDO die rundum zu beobachtende jeweilige Bildinformation BI ausgeht. Die Beleuchtungsvorrichtung BV enthält wiederum eine Lichtquelle L, welche sich vorzugsweise im axialen Zentrum befindet sowie die schichtenweise sowie in zylindrischem Aufbau und in betreffender Reihenfolge angeordneten POE, Modulations-Elemente OME sowie Strukturierten Retarder-Elementen SRE in jeweils gewünschter Anzahl. Alle diesbezüglichen OME werden außerdem noch mittels der betreffenden Steuerelemente SE angesteuert. Den äußeren Zylinder bildet demnach wiederum eine lichtdurchlässige und entsprechend geschichtete Struktur, welche, ausgehend von der Innenseite ein transmissives Projektions-Element TPE und daran anschließendes Transmissives Darstellendes Objekt TDO sowie entsprechende weitere transparente Schichten SS enthält. Für mache Anwendung kann es außerdem vorteilhaft sein, wenn das betreffende zylindrische Rohrelement, welches als TDO ausgebildet ist bzw. ein oder mehrere betreffende Polarisationsoptische Bildelemente POB innerhalb eines TDO umfasst, als leicht auswechselbares Bauteil vorgesehen wird, sodass dadurch ein Wechsel der jeweils gewünschten Motive leicht ausgeführt werden kann (z. B. durch einfachen Austausch eines oder mehrerer als entsprechende Folien ausgebildeter POB).

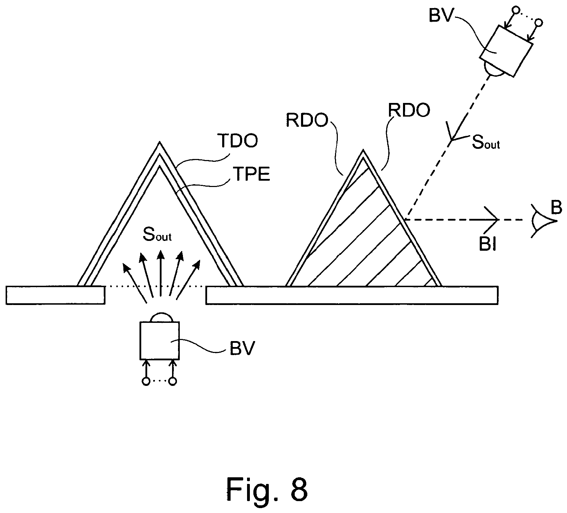

Die Fig. 8 zeigt noch einmal zwei weitere Varianten zur Ausführung der Erfindung am Beispiel eines pyramidenförmigen Architekturelements bzw. Gebrauchsobjekts einerseits in transmissiver Zusammensetzung und mit interner BV bei indirekter Rückprojektion gemäß dem Prinzip in Fig. 5B und andererseits das gleiche Objekt in reflexiver Zusammensetzung und mit externer BV in direkter Aufprojektion gemäß dem Prinzip in Fig. 5C.

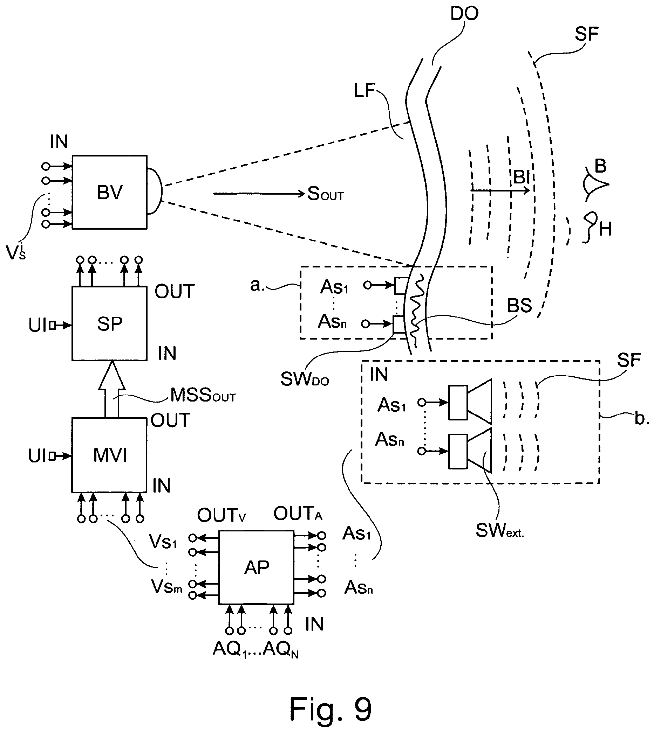

Das Ausführungsbeispiel in Fig. 9 betrifft den Einsatz der Erfindung im Kontext audiovisueller Medienanwendungen, insbesondere die Erweiterung und Kombination des betreffenden Polarisationsoptischen Systems mit Hilfe entsprechender Vorrichtungen und Verfahren zur synchronen Echtzeit Visualisierung von auditiven Phänomenen bzw. zur optischen Repräsentation mittels besagter Darstellender Objekte auf der Grundlage von diesbezüglich abgeleiteten sowie entsprechend parametrisierten akustischen Merkmalen in Verbindung mit ihrer zeitgleichen diesbezüglichen akustischen Wiedergabe.

In diesem Zusammenhang sind vor allem rechnerbasierte Systeme und Programme und/oder Multimedia-Systeme (z. B. Interaktive Video-Systeme) allgemein bekannt, welche vornehmlich zur MusikVisualisierung (sog. Music-Visualizer) mittels entsprechender Computergrafik dienen. In der Regel werden in diesen Fällen soundbasierte bildhafte bzw. graphische Effekte generiert und in Form von animierten Computergraphiken oder Video-Sequenzen auf einem Bildschirm bzw. als Video-Projektion entsprechend dargestellt. Hierzu werden den Nutzern auch entsprechende Schnittstellen und Programme zur Einbindung von Visualisierungs Plugins (z. B. SoundJam, WinAmp, Geiss, Monkey etc.) angeboten, welche in den jeweiligen Rechnersystemen installiert werden können. Nachteilig dabei ist, dass derartige computergraphische Visualisierungen meist eine mehr oder weniger direkte und/oder weitgehend willkürlich zugeordnete graphische Umsetzung von Audio-Daten in entsprechend vorbestimmte Graphik Objekte bzw. verschiedenartige Überlagerungen von graphischen Grundelementen (z. B. Punkte, Linien, geometrische Grundformen, Polygone etc.) zeigen, wobei bestimmte und weitgehend gleichartige repetitive Mustervarianten mit vornehmlich gleichförmigen und leicht vorhersehbaren stereotypen Bewegungen entstehen, welche somit in der Regel kaum einen sinnlich überzeugenden Bezug zum jeweils eingespielten musikalischen Erlebnis vermitteln können. Hinzu kommt der prinzipbedingte Umstand, dass bei vertretbarem Aufwand bzgl. der heutigen Computertechnik die praktisch auftretenden Latenzzeiten der graphischen Umsetzung komplexer Audio-Signale mittels der herkömmlichen Analyse-Algorithmen und Grafik-Prozessoren immer noch zu groß sind, um die auditiven und visuellen Ereignisse unter Echtzeitbedingung synchron zueinander zu verbinden. Ein weiterer grundlegender Nachteil dieser Verfahren ergibt sich außerdem dadurch, dass aufgrund des flächenhaft ausgebildeten Anzeigemediums in Form eines Bildschirms bzw. einer Bildprojektion, sich die Visualisierung grundsätzlich auf zwei Dimensionen mit vorbestimmter Größe beschränken muss, wobei außerdem in allen Fälle auch eine entsprechende systembedingte Pixelstruktur mit ebenso begrenzter Auflösung unvermeidlich ist.

Andere herkömmliche zur Lichtgestaltung eingesetzter Verfahren und Vorrichtungen bedienen sich dazu einer Lichtsteuerung durch Audiosignale unter Einsatz einer bestimmten Anzahl und Anordnung entsprechender Farblichtquellen vorzugsweise unter Verwendung des Prinzips der additiven Farbmischung, wobei sich derartige Licht-Installationen und deren Beleuchtungsszenarien meist in immer wiederkehrenden und stereotypen illustrativen Lichteffekten erschöpfen. Nachteilig bei dieser lichttechnischen Umsetzung ist außerdem, dass damit immer nur definierte im jeweiligen rhythmischen und/oder kontinuierlichem Wechsel erscheinende weitgehend monochrome Farbflächen auf einem jeweils beleuchteten Gegenstand erzeugt werden können, ohne dass dabei bestimmte musikspezifisch signifikante Struktur- bzw. Formvariationen möglich sind. Damit wird deutlich, dass der Einsatz von Lichtinstallationen auf der Basis von Lichtquellen allein, demzufolge nicht in der Lage sein kann, die komplexen Anforderungen an eine Umsetzung musikalischer Attribute in adäquate visuelle Darstellungsformen zu leisten.

Im Gegensatz zu den vorgenannten bekannten Systemen zur MusikVisualisierung mittels Beleuchtungsvorrichtungen bzw. mittels Computergraphiken, beruht das beanspruchte Verfahren in Verbindung mit den betreffenden Vorrichtungen auf einem grundsätzlich andersartigem konzeptuellen Ansatz, welcher die derzeitigen sowie zukünftig verfügbaren Erkenntnisse hinsichtlich der audiovisuellen sowie ästhetischen bzw. synästhetischen Rezeptionsbedingungen in Verbindung mit diesbezüglich entsprechend ausgewiesenen theoretisch und/oder empirisch geleiteten Konzepten dazu nutzt, um dadurch eine adäquate Umsetzung signifikanter auditorischer und/oder musikalischer Determinanten in entsprechend geeignete visuelle Erscheinungsformen innerhalb von beliebig formbaren und dimensionierbaren räumlichen Darstellenden Objekten unter Einsatz des beanspruchten Polarisationsoptischen Systems in Verbindung mit dem zusätzlich in das System implementierte Musik Visualisierungs Interface MVI zu erzielen. Hierbei können grundsätzlich verschiedenartige Wege zur Operationalisierung des betreffenden Transformationssowie Visualisierungsprozesses unter Anwendung unterschiedlicher technischer Mittel beschritten werden und im Zuge neuerer wissenschaftlicher Erkenntnisse und ästhetischer Erfahrungen auch immer wieder aufs Neue aktualisiert werden.

Im Besonderen grenzt sich nicht nur die Art und Weise der audiovisuellen Umsetzung sondern auch das hierzu verwendete betreffende Darstellungs-medium selbst gegenüber den herkömmlichen digitalen Medien auf einschlägige und vorteilhafte Weise ab. Während die Computergraphischen Visualisierungsprogramme lediglich dazu imstande sind, bestimmte virtuelle graphische Objekte mittels entsprechender Graphik-Programme zu generieren und zu animieren, wobei zur deren zweidimensionaler optischer Darstellung entweder ein Bildschirm oder eine entsprechende Bildprojektion als Anzeigemedium verwendet wird, erfolgt die Visualisierung durch die Ausnutzung polarisationsoptischer Prinzipien in Verbindung mit der stofflichen Beschaffenheit und den optischen Materialeigenschaften eines betreffenden transluzierenden Trägermediums, welches in dem Fall ausschließlich aus passiven optischen Elementen besteht, wobei diese Elemente außerdem auf beliebige Weise zu dreidimensionalen Darstellenden Objekten (DO) in lichtdurchlässiger (TDO) bzw. lichtreflektierender Zusammensetzung (RDO) und in jeder gewünschten Dimension und Form ausgestaltet und darüber hinaus auch noch zu entsprechenden Ensembles beliebig angeordnet werden können. Außerdem unterscheidet sich auch die Art und Weise, mit der die optischen Effekte, welche jeweils eine latente Bildinformation tragen, innerhalb der betreffenden DO auf rein physikalischem Wege selbst erzeugt werden, wobei diese in jeweils eigenständiger und individuell gestalteter Weise generiert und mittels einer externen Beleuchtungsvorrichtung auf lichtoptischem Wege parametrisch gesteuert bzw. animiert werden können, ohne dass dazu irgendeine Bildprojektion oder ein entsprechender Bildschirm zum Einsatz kommt. Eine weitere Besonderheit betrifft ebenso die Art der Übersetzung der musikspezifischen Determinanten in eine entsprechende und vor allem adäquate Form der visuellen Repräsentation der jeweils vorherrschenden auditiven Phänomene.

Wie die Fig. 9 zeigt, können hierbei mehrere parallele Audio-Signalquellen AQ1.....AQn verwendet werden (z. B. von allen herkömmliehen Audio-Geräten, Mikrofon, Soundkarte u.v.a.m.), welche jeweils als Eingangssignale IN einem mehrkanaligem Audio Prozessor AP zugeführt werden. Dieser AP sorgt einerseits für eine entsprechende Signalaufbereitung zum Zwecke der Akustischen Wiedergabe, sodass die Audio-Ausgangssignale OUT A (AS1......ASn) den entsprechenden Schallwandlern SW zugeführt werden können. Zur Schallwandlung können zwei unterschiedliche Möglichkeiten (a,b) genutzt werden: Im Fall a. werden die elektroakustischen Wandler direkt an ein betreffendes Darstellendes Objekt DO in der Weise angekoppelt, sodass diese Schallwandler (SWDO) z. B. als Flächenlautsprecher das zur Visualisierung dienende DO außerdem in der Weise nutzen, dass in dem DO durch Biegeschwingungen BS entsprechende akustische Moden angeregt werden (distributed waves), welche dann ein direkt von dem DO ausgehendes Schallfeld SF erzeugen, sodass dies vom Hörer H wahrgenommen werden kann. (Entsprechende elektroakustische Wandler zur Erzeugung von Biegeschwingungen in Flächenelementen werden z. B. von der Fa. NXT produziert)

Im Fall b. können zur akustische Wiedergabe auch die üblichen und extern positionierten Lautsprechersysteme SW ext. dienen.

Das AP besitzt außerdem entsprechende Funktionen zur elektronischen Signalaufbereitung der Audio-Eingangssignale AQ1......AQn zum Zwecke der Anpassung an die zur Musik Visualisierung bestimmten SystemKomponenten und liefert am zweiten Ausgang OUT v die hierzu erforderlichen Signale VS1.....VSm, welche zunächst auf den betreffenden Eingang IN des sog. Musik-Visualisierungs-Interface MVI zugeführt werden. Am Ausgang des MVI stehen dann bestimmte Anzahl paralleler Signalspuren MSSout zur Verfügung, welche als spezifische und/oder repräsentative dynamische Profile der jeweils mit Hilfe des MVI gebildeten Parameterstränge bzgl. der Zeitachse enthalten P1(t),...Pi(t),....Pm(t) und die zur parametrischen Steuerung der Optischen Effekte innerhalb eines betreffenden Darstellenden Objekts DO vorgesehen sind. Mittels des nachgeschalteten Signal Prozessors SP werden die jeweils gewünschten Signalspuren bzw. Datenströme entsprechend ausgewählt und auf spezifische Weise elektronisch mittels bekannter analoger oder digitaler Verfahren (z. B. DSP) in geeigneter Weise aufbereitet, sodass diese geeignet sind, die Beleuchtungsvorrichtung wie in Fig. 3 beispielhaft dargestellt, mittels der diesbezüglichen Steuersignale Vs,i entsprechend anzusteuern. Das Ziel der Anwendung besteht darin, dass die wiedergegebenen auditiven Ereignisse und die in den betreffenden DO visualisierten Erscheinungen einerseits jeweils unverzögert wahrgenommen werden können und dass andererseits von dem Rezipienten der diesbezüglichen audiovisuellen Darbietung außerdem wechselseitig eine sinnliche und/oder sinnhafte Entsprechung (Audiovisuelle Homologie) zwischen dem gerade Gehörten und Gesehenen empfunden werden kann. Die allgemein gültigen Regeln, welche der vom Rezipienten in diesem Zusammenhang erlebten Analogie zwischen beiden Sinnesmodalitäten zugrunde liegen (z. B. Intermodale Analogiebildung und Synästhesie) sind bisher noch weitgehend unbekannt und sind weiterhin Gegenstand zukünftiger sinnesphysiologischer und psychophysischer Forschung. Dennoch lassen sich aufgrund der verschiedenen möglichen Varianten im Hinblick auf die Umsetzungen, (z. B. hinsichtlich der gewählten Analyseverfahren, Parametrisierungsverfahren sowie der jeweils eingesetzten Darstellenden Objekte DO sowie der betreffenden Steuerungsfunktionen mittels der Beleuchtungsvorrichtung BV) diese nach jeweils individuell bevorzugten ästhetischen Entscheidungskriterien erproben und bewerten, wobei die dabei empirisch gefundenen Parameter und Regeln wiederum in den betreffenden Prozessualen Determinanten des MVI implementiert werden können, sodass die besagte Musik Visualisierung auch als ein geeignetes offenes System im Sinne einer experimentellen Plattform sowohl zur wissenschaftlichen Erforschung als auch zur subjektiven Erkundung synästhetischer Phänomene dienen kann.

Unter verallgemeinerter Betrachtung dient die eine grundlegende Aufgabe und Funktion des MVI demnach dazu, mittels mehrerer verschiedenartiger Verfahrensschritte sowie nach unterschiedlichen Konzepten und Strategien eine unverzögerte und möglichst eindringliche sinnliche Entsprechung zwischen dem Gehörten und Gesehenen zu erzielen.

In einem ersten Verfahrensschritt sollen aus dem gerade aktuell eingespielten Audio Material und in dem Fall aus den Audio-Signalen VS1....VSm, weitgehend simultan dazu, jeweils bestimmte repräsentative und/oder signifikante musikspezifische bzw. psychophysische Attribute und/oder Merkmale auf automatische Weise evaluiert werden (sog. Merkmal-Extraktion). Dies geschieht in der Regel durch Anwendung bekannter technischer Mittel, wie sie beispielsweise zur automatisierten Mustererkennung und/oder zur Klanganalyse und/oder zur Dynamischen Analyse eingesetzt werden beispielsweise durch hierfür geeignete Algorithmen (z. B. auf der Basis Neuronale Netze, Lineare und/oder Nichtlineare Systemtheorie u. a.), welche jeweils in dem betreffenden MVI implementiert sind, sodass die dabei aufgrund verschiedener und gegebenenfalls parallel arbeitender Analyse-Prozesse sowie nach vorbestimmten Kriterien gewonnenen und entsprechend klassifizierten Merkmale, ihrerseits auch für bestimmte ausgewählte Charakteristika der diesbezüglich dargebotenen Musik kennzeichnend sind. Somit können je nach Intention des Anwenders gleichzeitig eine bestimmte Anzahl unterschiedlicher spezifischer Merkmale gewonnen werden, wobei entweder ein einzelnes ausgewähltes spezifisches Merkmal oder aus einer bestimmten Gruppe jeweils zusammengefasster Merkmale (z. B. in einer Meta-Repräsentation in Form von spezifischen mehrdimensionalen Merkmalvektoren bzw. in einem durch die diesbezüglichen Merkmalvektoren aufgespannten n-dimensionalen Merkmalraum-Raum) jeweils bestimmte auditorische Aspekte der vorliegenden musikalischen Struktur jeweils in einschlägiger Weise charakterisieren.

Der nachfolgende zweite Verfahrensschritt betrifft eine weitere grundlegende Funktion des MVI, nämlich die automatisierte Übersetzung bzw. die Interpretation (sog. Algorithmische Interpretation) bestimmter musikspezifischer Attribute bzw. Charakteristika zu deren optischer Darstellung in entsprechende homologe visuellen Erscheinungsformen innerhalb eines oder eines betreffend räumlich angeordneten und entsprechend ausgebildeten Ensembles von Darstellenden Objekten DO. Insbesondere besteht die Aufgabe zunächst darin, dass dazu die in dem ersten Schritt aus ein und demselben jeweils eingespielten Audiosignal bzw. aus dem diesbezüglichen Datenstrom gewonnenen unterschiedlichen Merkmale, welche jeweils unterschiedliche auditive Charakteristika repräsentieren, auf eine möglichst adäquate Weise zu parametrisieren sind, sodass hieraus eine betreffende Anzahl entsprechend geeigneter paralleler und zeitlich miteinander korrelierender Signalspuren MSSout gewonnen werden, wobei die jeweilige momentane Ausgangsgröße jeder einzelnen Signalspur zu jedem Zeitpunkt den betreffenden Intensitätswert des diesbezüglichen Merkmals repräsentiert und zwar in Form einer dazu analogen Signal-Amplitude.

Mit dem dritten anschließenden Verfahrenschritt wird eine Bewertung und Entscheidung des Anwenders vorgenommen, welche sich mittels einer entsprechend ausgebildeten Anwender-Schnittstelle (UI in Fig. 9) mit entsprechenden Eingabefunktion ausführen lässt, welche sich auf den gezielten Zugriff auf verschiedene Prozesse und Parameter bzgl. der weiteren Signalwege erstrecken. Dies erlaubt dem Anwender, einerseits eine bestimmte Auswahl aus einer Vielzahl möglicher parametrischer Signalspuren zu treffen, welche im betreffenden Anwendungsfall zur Ansteuerung der jeweils eingesetztem OME innerhalb der BV dienen soll. Andererseits kann gegebenenfalls in diesem Zusammenhang auch noch eine weitere Aufbereitung bzw. Verknüpfung mehrerer Signalspuren untereinander erfolgen, wobei bekannte elektronische Mittel eingesetzt werden, wodurch z. B. eine zusätzliche Gewichtung und/oder Mischung und/oder Modulation und/oder Transformation der jeweils beteiligten Signalbeiträge bewirkt werden kann. Damit kann der Anwender entsprechend seinen individuellen ästhetischen bzw. funktionalen Präferenzen eine jeweils passende Visualisierung vornehmen. Mittels dieser Adaption des MVI lässt sich jede entsprechend gestaltete und hinsichtlich der auditiven Charakteristika parametrisch gesteuerte bzw. animierte Visuelle Repräsentation mittels des Polarisationsoptischen Systems auf jeweils unterschiedliche Weise übersetzen.

Im Grunde stellt ein jedes MVI hinsichtlich seiner verallgemeinerten Funktionalität in allen Anwendungsfällen jeweils eine bestimmte Form der Operationalisierung eines automatisierten bzw. halbautomatisierten und entsprechend gearteten Interpretationsprozess (sog. algorithmische Interpretation) dar. Diese unterschiedlichen Aspekte bzgl. desselben musikalischen Materials können z. B. die diesbezügliche zeitliche Entwicklung (z. B. Tempi, Pausen, Acceleranco, Ritardando u.v.a.m.) sowie die Dynamik (forte, piano, Akzent) und/oder die Frequenz (Tonhöhen, Tonalitäten, Harmonien etc.) betreffen. Somit liegen, in entsprechender Weise parametrisiert, am Ausgang OUT des MVI mehrere analoge Ausgangssignale MSSout parallel vor, deren diesbezügliche Signalverläufe jeweils bestimmte merkmalspezifische Details musikalischer Attribute wiedergeben und die mittels des nachgeschalteten Signal Prozessors SP in die betreffenden Steuersignale Vsi zur Ansteuerung der BV umgewandelt werden. Es obliegt somit jedem Anwender anhand der jeweils eingesetzten und entsprechend arrangierten Darstellenden Objekte mitsamt der darin enthaltenden latenten Bildinformation sowie der jeweils bevorzugten Farbpalette in Verbindung mit dem durch den durch das MVI jeweils favorisierten algorithmischen Interpretationsprozess eine geeignete Visualisierung zu erzielen, wobei im prozessualen Sinne eine entsprechende sichtbare und intuitiv erfahrbare Metapher der musikalischen Komposition durchscheint, sodass hinsichtlich des gerade Gehörten und Gesehenen eine unmittelbare wechselseitige sinnliche und sinnhafte Entsprechung zwischen dem akustischen und visuellen Sinneserlebnis vermittelt wird. Demzufolge kann im Hinblick auf die jeweils vom Anwender intendierte Vorstellung und Erwartung bezüglich einer geeigneten Musik- Visualisierung, welche in hohem Maße von den subjektiven ästhetischen und psychophysischen Kriterien des jeweiligen Rezipienten bestimmt wird, somit keine allgemein gültige Lösung existieren, sodass es deshalb auch keine einzig verbindliche Art und Weise geben kann, welche die jeweils innerhalb des betreffenden MVI implementierten Funktionen festlegt.

Als Anhaltspunkt soll das folgende Ausführungsbeispiel dienen, welches erprobt wurde und außerdem mit vergleichsweise geringem Aufwand hergestellt werden kann, gleichsam als Minimal Konfiguration für eine angemessene Musik Visualisierung.

Das betreffende Polarisationsoptische System kann dabei entsprechend den in Fig. 5A bis 5E dargestellten Varianten ausgeführt werden, wobei die betreffende Beleuchtungsvorrichtung BV gemäß Fig. 3 zwei Optischen Modulations-Einheiten OME1; OME2 sowie zwei entsprechend gestaltete Strukturierte Retarder Elemente SRE 1; SRE 2 enthalten kann. Als OME können dabei marktgängige Twisted Nematic Cells TNC vorteilhaft eingesetzt werden, welche jeweils durch ein amplitudenmoduliertes Signal (wählbare Trägerfrequenz z. B. zwischen 200 Hz - 1 KHz) angesteuert werden, wobei die Modulation durch das betreffende niederfrequente Steuersignals VS1 bzw. VS2 erfolgt. Zur Anpassung der Ansteuerung an die betreffende Kennlinie der TNC kann einerseits der Modulationsgrad der Modulators entsprechend variiert werden und andererseits der nutzbare Dynamische Bereich mittels entsprechender Dynamik-Kompression abgestimmt werden, für den Fall, dass sehr großer Dynamikunterschiede der diesbezüglichen Signalpegel auftreten sollten bzw. dass die Farbdynamik und/oder Variationsbreite der besagten optischen Effekte auf gewünschte Weise auf ein bestimmtes Ausmaß beschränkt werden soll. Die Ausführung des betreffenden Darstellenden Objekts DO mit entsprechend gestalteten Polarisationsoptischen Bildelementen POB obliegt der jeweiligen Intention des Anwenders. Als diesbezügliche Beispiele hierfür können die Fig. 6A, 6B, 7, 8 dienen. Gemäß Fig. 9 werden zwei Audio-Signalquellen mit den Signalen AQ1; AQ2 dem Audio Prozessor AP zugeführt, welcher die Audio-Signale AS1; AS2 z. B. als Stereo-Signale an die betreffenden Schallwandlern SW weiterleitet. Am Ausgang OUTv des AP können entweder analoge Signale nach entsprechender Pegelanpassung dem Analogeingang des Musik-Visualisierungs Interface MVI zugeführt werden, oder auch in digitaler Form vorliegen, sodass der diesbezügliche Datenstrom über eine entsprechende Schnittstelle an das MVI weitergeleitet wird. Dem Fachmann auf diesem Gebiet sind entsprechende Mittel (z. B. analoge oder digitale Signalverarbeitung und Signal-Analyse etc.) bekannt, mit deren Hilfe sich die im Folgenden beschriebenen grundlegenden Verarbeitungsschritte auf unterschiedliche Weise umsetzen lassen. Das erste Signal VS1 kann beispielsweise einem innerhalb des MVI implementierten Analyseprozess zugeführt werden, welcher z. B. das betreffende Signal einer FFT (Fast Fourier Transform) oder Wavelet-Analyse o.a. unterzieht und das jeweilige Klangspektrum z. B. in diskreten Zeitfenstern sowie Frequenzbändern berechnet. Die betreffenden Spektren werden nach entsprechenden Gesichtpunkten zur Evaluierung signifikanter akustischer Merkmale weiterverarbeitet, wobei beispielsweise die zeitliche Entwicklung der Spektralen Amplituden innerhalb eines oder mehrerer jeweils ausgewählter vorbestimmter Frequenzbänder einen diesbezüglichen Merkmalvektor bilden können. Neben den spektral entsprechend gewichteten Intensitätsanteilen des betreffenden Klangspektrums (z. B. hinsichtlich der Formanten) erhält man wahlweise auch eine spektrale Differenzierung bezüglich der tonalen (harmonische) bzw. geräuschhaften Anteile. Im Wesentlichen könnten sich diese im Hinblick auf das erste Signal VS1 abgeleiteten Merkmale auf die zeitliche Entwicklung tonaler Aspekte als musikspezifische Attribute beziehen. Diese dynamisch variierenden Parameterstränge werden dann mittels verschiedener Signalverarbeitungsfunktionen (Filterfunktionen, Synthesefunktionen, Wandlerfunktionen, Modulationsfunktionen, Steuerungs- und Verknüpfungsfunktionen, zeitliche Verzögerungen, Frequenzverschiebungen sowie vielfältige mathematische bzw. logische Operationen u.v.a.m.) in gewünschter Weise gemäß ihrer zeitlichen Relation in ein repräsentatives analoges Profil von diesbezüglichen Signalamplituden zum Signal P1(t) zusammengefasst, welches sich hinsichtlich seiner sukzessiven dynamischen Entwicklung synchron zum gerade Gehörten verhält. Zur Erzielung einer hinreichenden Synchronizität der Visualisierung mit dem Audio-Signal, kann das Audio-Signal zum Ausgleich gegebenenfalls mit einer bestimmten Verzögerung (Latenz) wiedergegeben werden, da die internen Prozesse des MVI mit einer bestimmten Verarbeitungszeit behaftet sein können. Mit dem Signalprozessor SP wird das Signal SP1(t) an die Erfordernisse zur Ansteuerung des OME1 innerhalb der BV mittels des Steuersignals VS1 entsprechend angepasst. Im Zuge der Visualisierung der besagten optischen Effekte bzgl. der betreffenden Motive innerhalb des Darstellenden Objekts DO lassen sich mittels des Steuersignals VS1 somit bestimmte tonale Merkmale der Musikalischen Darbietung in entsprechende dynamische Farbvariationen in Verbindung mit einer jeweils gewünschten Farbpalette animieren.

Die Visualisierung erfolgt mit einer höherwertigeren Anmutung und Komplexität, wenn die Animation eine zusätzliche zeitliche Ansteuerung eines weiteren Optischen Modulations-Elementes OME2 erfährt, welches durch das diesbezügliche Steuersignal VS2 angesteuert wird und das in diesem Fall von andersartigen musikspezifischen Merkmalen, wie im Fall des VS1 abgeleitet wird, sodass die dadurch in dem DO entstehenden Bewegungen, Farbverläufe sich gegenseitig auf verschachtelte aber dennoch determinierte Weise durchdringen. Zu diesem Zweck werden aus dem Signal VS2 mittels des MVI entsprechende Hüllkurven (z. B. Envelope Follower) gebildet, welche zudem den Lautstärkeverlauf repräsentieren und somit einen weiteren musikalischen Aspekt hinsichtlich der Dynamik und Rhythmik wiedergeben. Auch in diesem Fall können weitere zusätzliche und bekannte Mittel der weiteren Signalverarbeitung eingesetzt werden, um zu einem gewünschten Ergebnis zu gelangen.

Zur praktischen Realisierung können vorteilhaft auch bewährte industriell verfügbare Modulare Systeme (z. B. DSP), Programmierumgebungen und diesbezügliche Systemperipherien eingesetzt werden, welche spezifisch auf die Echtzeit-Audio-Verarbeitung zugeschnitten sind (z. B. MAX, REAKTOR u.v.a.m.) und die entsprechende Werkzeuge genutzt werden.

## Patentansprüche

1. System zur Darstellung optischer Effekte mit einer Beleuchtungsvorrichtung (BV) und einem darstellenden Objekt (DO),
wobei die Beleuchtungsvorrichtung (BV) zumindest eine einer Lichtquelle (L) nachgeschaltete Eingangspolarisationseinheit (POE) zur Polarisationsbeeinflussung sowie zumindest eine der Eingangspolarisationseinheit (POE) nachgeschaltete individuell ansteuerbare Modulationseinheit (OME) zur Polarisationsbeeinflussung und/oder Retardanzbeeinflussung aufweist und
wobei das darstellende Objekt (DO) zumindest eine Objektretardereinheit (POB) zur Retardanzbeeinflussung sowie eine der Objektretardereinheit (POB) nachgeschaltete Ausgangspolarisationseinheit (PE) aufweist,
**dadurch gekennzeichnet,**
**dass** die Beleuchtungsvorrichtung (BV) in modularer Bauweise ausgeführt ist, wobei sich in einen Lichtweg nach der Eingangspolarisationseinheit (POE) weitere optische Funktionselemente zur Retardanzbeeinflussung in gewünschter Anzahl und Anordnung einbringen lassen und
das darstellende Objekt (DO) aus passiven optischen Elementen besteht,
das darstellende Objekt (DO) in unterschiedlicher räumlicher Beabstandung und daraus resultierender frei beweglicher Anordnung außerhalb der Beleuchtungsvorrichtung (BV) und dieser nachgeschaltet angeordnet ist und eine beliebige ausleuchtbare Form und Dimension aufweist,
wobei aus der Beleuchtungsvorrichtung (BV) austretendes Licht (Sout) eine innere Struktur mit einer definierten, für das Auge ununterscheidbaren internen Zusammensetzung aufweist,
wobei die Objektretardereinheit (POB) des darstellenden Objekts (DO) eine strukturierte, optisch anisotrope Schicht aufweist, deren Struktur einer reversibel oder irreversibel eingeprägten, latenten Bildinformation entspricht, wodurch die latente Bildinformation in Form eines entsprechend eingeprägten Musters von lokalen optischen Gangunterschieden vorliegt und
wobei das aus der Beleuchtungsvorrichtung (BV) austretende mittels Modulationseinheit (OME) modulierte Licht (Sout) auf die Objektretardereinheit (POB) trifft, um dort mit der eingeprägten Bildinformation zusammen zu wirken, wodurch optische Effekte mittels der Ausgangspolarisationseinheit (PE) visualisiert werden können.

2. System nach Anspruch 1, wobei die Beleuchtungsvorrichtung (BV) weiterhin zumindest eine Beleuchtungsretardereinheit (SRE) zur Retardanzbeeinflussung aufweist.

3. System nach Anspruch 2, wobei die Beleuchtungsretardereinheit (SRE) Mittel zur zeitabhängigen und/oder ortsabhängigen Retardanzbeeinflussung aufweist.

4. System nach einem der Ansprüche 1 bis 3, wobei die Eingangspolarisationseinheit (POE) Mittel zur ortsabhängigen Polarisationsbeeinflussung aufweist.

5. System nach einem der Ansprüche 1 bis 4, wobei die Modulationseinheit (OME) Mittel zur zeitabhängigen und/oder ortsabhängigen Polarisationsbeeinflussung und/oder Retardanzbeeinflussung aufweist.

6. System nach einem der Ansprüche 1 bis 5, wobei das System Mittel zur gezielten externen Energiebeaufschlagung der Objektretardereinheit (POB) aufweist, die eine zeitabhängige und/oder ortsabhängige Retardanzbeeinflussung der passiven Objektretardereinheit und dadurch ein Einprägen der latenten Bildinformation ermöglicht.

7. System nach einem der Ansprüche 2 bis 6, wobei die Beleuchtungsretardereinheit (SRE) und/oder die Modulationseinheit (OME) zumindest eine optisch anisotrope Substanz und/oder eine optisch anisotrope Materialeigenschaft aufweist.

8. System nach einem der Ansprüche 2 bis 7, wobei die Beleuchtungsretardereinheit (SRE) und/oder die Modulationseinheit (OME) eine ortsabhängige optische Anisotropie und/oder eine ortsabhängige Schichtdicke und/oder eine ortsabhängige Orientierung einer Materialeigenschaft und/oder einen ortsabhängigen helikalen Pitch aufweist.

9. System nach einem der Ansprüche 1 bis 8, wobei die Objektretardereinheit (POB) eine ortsabhängige optische Anisotropie und/oder eine ortsabhängige Schichtdicke und/oder eine ortsabhängige Orientierung einer Materialeigenschaft und/oder einen ortsabhängigen helikalen Pitch aufweist.

10. System nach einem der Ansprüche 1 bis 9, wobei die Eingangspolarisationseinheit (POE) und/oder Ausgangspolarisationseinheit (PE) auswechselbar oder entfernbar sind.

11. System nach einem der Ansprüche 1 bis 10, wobei die Eingangspolarisationseinheit (POE) Bereiche umfasst, die keine Polarisation bewirken, und wobei diese Bereiche einen unpolarisierenden Lichtfilter aufweisen.

12. System nach einem der Ansprüche 1 bis 11, wobei die Modulationseinheit (OME) zumindest eine mesogene Substanz, insbesondere Flüssigkristall, zur zeitabhängigen und/oder ortsabhängigen Polarisationsbeeinflussung und/oder Retardanzbeeinflussung aufweist.

13. System nach einem der Ansprüche 5 bis 12, wobei die zeitabhängige und/oder ortsabhängige Polarisationsbeeinflussung und/oder Retardanzbeeinflussung in der Modulationseinheit (OME) über eine Energiebeaufschlagung steuerbar ist.

14. System nach Anspruch 13, wobei die Energiebeaufschlagung mittels mechanischer und/oder sonischer und/oder thermischer und/oder elektrischer und/oder magnetischer und/oder elektromagnetischer Energieerzeuger auf die mesogene Substanz erfolgt.

15. System nach einem der Ansprüche 1 bis 14, wobei das darstellende Objekt (DO) weiterhin eine Reflektionseinheit umfasst.

16. System nach einem der Ansprüche 1 bis 15, das weiterhin zumindest einen Biegeschwinger (BS) umfasst, der an das darstellende Objekt (DO) angekoppelt ist und welcher akustische Signale erzeugen kann.

17. System nach Anspruch 16, wobei der Biegeschwinger (BS) an die Objektretardereinheit (POB) angekoppelt ist.

18. Verfahren zur Darstellung optischer Effekte mit einer Vorrichtung nach einem der Ansprüche 1 bis 17,
bei welchem in der Modulationseinheit (OME) durch Energiebeaufschlagung eine Modulation der Lichtbeschaffenheit hinsichtlich der Polarisation und/oder der Retardanz erfolgt,
**dadurch gekennzeichnet,**
**dass** in der Objektretardereinheit (POB) die Modulation der Lichtbeschaffenheit mit der strukturierten, optisch anisotropen Schicht, deren Struktur einer reversibel oder irreversibel eingeprägten latenten Bildinformation entspricht, zusammenwirkt, wodurch optische Effekte mittels der Ausgangspolarisationseinheit (PE) visualisiert werden.

19. Verfahren zur Darstellung optischer Effekte nach Anspruch 18, wobei in der Modulationseinheit (OME) die Modulation der Lichtbeschaffenheit zeitabhängig und/oder ortsabhängig erfolgt.

20. Verfahren zur Darstellung optischer Effekte nach Anspruch 18 oder 19, wobei in der Objektretardereinheit (POB) die Einprägung der Bildinformation zeitabhängig und/oder ortsabhängig durch gezielte externe Energiebeaufschlagung erfolgt.

21. Verfahren zur Darstellung optischer Effekte nach einem der Ansprüche 18 bis 20, wobei durch zumindest bereichsweise Aufhebung der Polarisation die im darstellenden Objekt (DO) entstehenden optischen Effekte unsichtbar gemacht werden.

22. Verfahren zur Darstellung optischer Effekte nach Anspruch 21, wobei die Aufhebung der Polarisation durch Entfernung zumindest einer Polarisationseinheit (POE, PE) bewirkt wird.

23. Verfahren zur Darstellung optischer Effekte nach einem der Ansprüche 18 bis 22, wobei die Energiebeaufschlagung der Modulationseinheit (OME) auf zumindest eine mesogene Substanz, insbesondere Flüssigkristall, erfolgt.

24. Verfahren zur Darstellung optischer Effekte nach einem der Ansprüche 18 bis 23, wobei die Energiebeaufschlagung der Modulationseinheit (OME) korrespondierend zu einem Basissignal (Si) gesteuert wird.

25. Verfahren zur Darstellung optischer Effekte nach Anspruch 24, wobei das Basissignal (Si) zumindest einem modulierten Signal, insbesondere einem Audiosignal (SS1, SS2), folgt.

26. Verfahren zur Darstellung optischer Effekte nach einem der Ansprüche 18 bis 25, wobei das von der Beleuchtungsvorrichtung (BV) auf das darstellende Objekt (DO) treffende Licht (Sout) durch das darstellende Objekt (DO) hindurch tritt, um auf der anderen Seite des darstellenden Objekts (DO) betrachtet werden zu können.

27. Verfahren zur Darstellung optischer Effekte nach einem der Ansprüche 18 bis 26, wobei das von der Beleuchtungsvorrichtung (BV) auf das darstellende Objekt (DO) treffende Licht (Sout) innerhalb des darstellenden Objekts (DO) reflektiert wird, um auf der Eintrittsseite des darstellenden Objekts (DO) betrachtet werden zu können.

## Claims

1. A system for displaying optical effects, comprising a lighting device (BV) and a displaying object (DO),
the lighting device (BV) having at least one input polarization unit (POE) for influencing polarization connected downstream of a light source (L) and at least one individually controllable modulation unit (OME) for influencing polarization and/or influencing retardance connected downstream of the input polarization unit (POE), and
the displaying object (DO) having at least one object retarder unit (POB) for influencing retardance and an output polarization unit (PE) connected downstream of the object retarder unit (POB), **characterized in that**
the lighting device (BV) has a modular design, a desired number and arrangement of other optical functional elements for influencing retardance being introducible into a light path downstream of the input polarization unit (POE), and
the displaying object (DO) consisting of passive optical elements, the displaying object (DO) being arranged at different distances and in a resulting freely mobile arrangement outside of the lighting device (BV) and downstream thereof and having any kind of lightable shape and dimension,
light (Sout) exiting the lighting device (BV) exhibiting an inner structure having a defined internal composition indistinguishable to the eye,
the object retarder unit (POB) of the displaying object (DO) having a structured, optically anisotropic layer whose structure corresponds to a reversibly or irreversibly impressed latent piece of image information, the latent piece of image information thus being present in the form of a correspondingly impressed pattern of local optical path differences, and
light (Sout) exiting the lighting device and modulated by means of the modulation unit (OME) hitting the object retarder unit (POB) so as to interact there with the impressed piece of image information, whereby optical effects can be visualized by means of the output polarization unit (PE).

2. The system according to claim 1, wherein the lighting device (BV) further has at least one lighting retarder unit (SRE) for influencing retardance.

3. The system according to claim 2, wherein the lighting retarder unit (SRE) has means for influencing retardance in a time-dependent and/or location-dependent manner.

4. The system according to any one of claims 1 to 3, wherein the input polarization unit (POE) has means for influencing polarization in a location-dependent manner.

5. The system according to any one of claims 1 to 4, wherein the modulation unit (OME) has means for influencing polarization and/or influencing retardance in a time-dependent and/or location-dependent manner.

6. The system according to any one of claims 1 to 5, wherein the system has means for targeted exposure of the object retarder unit (POB) to energy, said exposure to energy allowing the passive object retarder unit to be retardance-influenced in a time-dependent and/or location-dependent manner and thus the latent piece of image information to be impressed.

7. The system according to any one of claims 2 to 6, wherein the lighting retarder unit (SRE) and/or the modulation unit (OME) has at least one optically anisotropic substance and/or an optically anisotropic material property.

8. The system according to any one of claims 2 to 7, wherein the lighting retarder unit (SRE) and/or the modulation unit (OME) exhibits location-dependent optical anisotropy and/or a location-dependent layer thickness and/or a location-dependent orientation of a material property and/or a location-dependent helical pitch.

9. The system according to any one of claims 1 to 8, wherein the object retarder unit (POB) exhibits location-dependent optical anisotropy and/or a location-dependent layer thickness and/or a location-dependent orientation of a material property and/or a location-dependent helical pitch.

10. The system according to any one of claims 1 to 9, wherein the input polarization unit (POE) and/or the output polarization unit (PE) can be replaced or removed.

11. The system according to any one of claims 1 to 10, wherein the input polarization unit (POE) comprises areas that effect no polarization, these areas having a non-polarizing light filter.

12. The system according to one of claims 1 to 11, wherein the modulation unit (OME) has at least one mesogenic substance, in particular liquid crystal, for influencing polarization and/or retardance in a time-dependent and/or location-dependent manner.

13. The system according to any one of claims 5 to 12, wherein the process of influencing polarization and/or retardance in a time-dependent and/or location-dependent manner in the modulation unit (OME) can be controlled through exposure to energy.

14. The system according to claim 13, wherein the exposure to energy takes place by using a mechanical and/or sonic and/or thermal and/or electrical and/or magnetic and/or electromagnetic energy generator on the mesogenic substance.

15. The system according to any one of claims 1 to 14, wherein the displaying object (DO) further comprises a reflection unit.

16. The system according to any one of claims 1 to 15, further comprising at least one flexural resonator (BS), which is coupled to the displaying object (DO) and can generate acoustic signals.

17. The system according to claim 16, wherein the flexural resonator (BS) is coupled to the object retarder unit (POB).

18. A method for displaying optical effects using a device according to any one of claims 1 to 17,
in which the light composition is modulated with respect to polarization and/or retardance in the modulation unit (OME) via exposure to energy,
**characterized in that** in the object retarder unit (POB), the modulation of the light composition interacts with the structured, optically anisotropic layer, whose structure corresponds to a reversibly or irreversibly impressed latent piece of image information, whereby optical effects are visualized by means of the output polarization unit (PE).

19. The method for displaying optical effects according to claim 18, wherein the light composition is modulated in a time-dependent and/or location-dependent manner in the modulation unit (OME).

20. The method for displaying optical effects according to claim 18 or 19, wherein the piece of image information is impressed in a time-dependent and/or location-dependent manner in the object retarder unit (POB) through targeted exposure to external energy.

21. The method for displaying optical effects according to any one of claims 18 to 20, wherein the optical effects arising in the displaying object (DO) are made invisible by at least regionally canceling the polarization.

22. The method for displaying optical effects according to claim 21, wherein the polarization is cancelled by removing at least one polarization unit (POE, PE).

23. The method for displaying optical effects according to any one of claims 18 to 22, wherein at least one mesogenic substance, in particular liquid crystal, of the modulation unit (OME) is exposed to energy.

24. The method for displaying optical effects according to any one of claims 18 to 23, wherein control of the exposure of the modulation unit (OME) to energy is correspondent to a base signal (Si).

25. The method for displaying optical effects according to claim 24, wherein the base signal (Si) follows at least one modulated signal, in particular an audio signal (SS1, SS2).

26. The method for displaying optical effects according to any one of claims 18 to 25, wherein the light (Sout) from the lighting device (BV) incident on the displaying object (DO) passes through the displaying object (DO), so that it can be viewed on the other side of the displaying object (DO).

27. The method for displaying optical effects according to any one of claims 18 to 26, wherein the light (Sout) from the lighting device (BV) incident on the displaying object (DO) is reflected within the displaying object (DO), so that it can be viewed on the entry side of the displaying object (DO).

## Revendications

1. Système pour la représentation d'effets optiques, comprenant un dispositif d'illumination (BV) et un objet représentant (DO),
le dispositif d'illumination (BV) comportant au moins une unité de polarisation d'entrée (POE) connectée en aval d'une source lumineuse (L) et servant à influencer la polarisation et au moins une unité de modulation (OME) apte à être commandée individuellement, connectée en aval de l'unité de polarisation d'entrée (POE) et servant à influencer la polarisation et/ou à influencer le retard, et
l'objet représentant (DO) comportant au moins une unité de retard d'objet (POB) servant à influencer le retard ainsi qu'une unité de polarisation de sortie (PE) connectée en aval de l'unité de retard d'objet (POB),
**caractérisé en ce que**
le dispositif d'illumination (BV) présente une conception modulaire, un nombre et un agencement souhaité d'autres éléments fonctionnels optiques servant à influencer le retard pouvant être introduits dans un trajet optique en aval de l'unité de polarisation d'entrée (POE) et l'objet représentant (DO) se composant d'éléments optiques passifs, l'objet représentant (DO) étant disposé à des distances différentes et dans un agencement librement mobile en résultant en dehors du dispositif d'illumination (BV) et étant disposé en aval de celui-ci et présentant une forme et une dimension quelconque éclairable,
la lumière (Sout) sortant du dispositif d'illumination (BV) présentant une structure interne ayant une composition interne définie indiscernable à l'oeil,
l'unité de retard d'objet (POB) de l'objet représentant (DO) comportant une couche optiquement anisotrope structurée dont la structure correspond à une information d'image latente imprimée de manière réversible ou irréversible, l'information d'image latente existant ainsi sous forme d'un motif de différences de trajet optiques locales imprimé de façon correspondante, et
la lumière (Sout) modulée par l'unité de modulation (OME) et sortant du dispositif d'illumination (BV) rencontrant l'unité de retard d'objet (POB) afin d'y coopérer avec l'information d'image imprimée, permettant ainsi la visualisation d'effets optiques au moyen de l'unité de polarisation de sortie (PE).

2. Système selon la revendication 1, dans lequel le dispositif d'illumination (BV) comporte en outre au moins une unité de retard d'illumination (SRE) servant à influencer le retard.

3. Système selon la revendication 2, dans lequel l'unité de retard d'illumination (SRE) comporte des moyens pour influencer le retard en fonction du temps et/ou en fonction du lieu.

4. Système selon l'une quelconque des revendications 1 à 3, dans lequel l'unité de polarisation d'entrée (POE) comporte des moyens pour influencer la polarisation en fonction du lieu.

5. Système selon l'une quelconque des revendications 1 à 4, dans lequel l'unité de modulation (OME) comporte des moyens pour influencer la polarisation et/ou pour influencer le retard en fonction du temps et/ou en fonction du lieu.

6. Système selon l'une quelconque des revendications 1 à 5, dans lequel le système comporte des moyens pour appliquer de l'énergie de manière externe ciblée à l'unité de retard d'objet (POB), cette application de l'énergie permettant une influence de retard de l'unité de retard d'objet passive en fonction du temps et/ou en fonction du lieu et donc l'impression de l'information d'image latente.

7. Système selon l'une quelconque des revendications 2 à 6, dans lequel l'unité de retard d'illumination (SRE) et/ou l'unité de modulation (OME) comporte au moins une substance optiquement anisotrope et/ou une propriété matérielle optiquement anisotrope.

8. Système selon l'une quelconque des revendications 2 à 7, dans lequel l'unité de retard d'illumination (SRE) et/ou l'unité de modulation (OME) présente une anisotropie optique dépendante du lieu et/ou une largeur de couche dépendante du lieu et/ou une orientation d'une propriété matérielle dépendante du lieu et/ou un pas d'hélice dépendant du lieu.

9. Système selon l'une quelconque des revendications 1 à 8, dans lequel l'unité de retard d'objet (POB) présente une anisotropie optique dépendante du lieu et/ou une largeur de couche dépendante du lieu et/ou une orientation d'une propriété matérielle dépendante du lieu et/ou un pas d'hélice dépendant du lieu.

10. Système selon l'une quelconque des revendications 1 à 9, dans lequel l'unité de polarisation d'entrée (POE) et/ou l'unité de polarisation de sortie (PE) sont échangeables ou amovibles.

11. Système selon l'une quelconque des revendications 1 à 10, dans lequel l'unité de polarisation d'entrée (POE) comprend des régions qui n'effectuent aucune polarisation, lesdites régions comportant un filtre optique non polarisant.

12. Système selon l'une quelconque des revendications 1 à 11, dans lequel l'unité de modulation (OME) comporte au moins une substance mésogène, notamment du cristal liquide, pour influencer la polarisation et/ou pour influencer le retard en fonction du temps et/ou en fonction du lieu.

13. Système selon l'une quelconque des revendications 5 à 12, dans lequel la procédure d'influencer la polarisation et/ou d'influencer le retard en fonction du temps et/ou en fonction du lieu dans l'unité de modulation (OME) peut être pilotée par une application de l'énergie.

14. Système selon la revendication 13, dans lequel l'énergie est appliquée à la substance mésogène au moyen de générateurs d'énergie mécaniques et/ou soniques et/ou thermiques et/ou électriques et/ou magnétiques et/ou électromagnétiques.

15. Système selon l'une quelconque des revendications 1 à 14, dans lequel l'objet représentant (DO) comprend en outre une unité de réflexion.

16. Système selon l'une quelconque des revendications 1 à 15, comprenant en outre au moins un tube en U oscillant (BS) qui est accouplé à l'objet représentant (DO) et qui peut générer des signaux acoustiques.

17. Système selon la revendication 16, dans lequel le tube en U oscillant (BS) est accouplé à l'unité de retard d'objet (POB).

18. Procédé de représentation d'effets optiques utilisant un dispositif selon l'une quelconque des revendications 1 à 17,
dans lequel la constitution de la lumière est modulée quant à la polarisation et/ou au retard dans l'unité de modulation (OME) par l'application de l'énergie,
**caractérisé en ce que**
dans l'unité de retard d'objet (POB), la modulation de la constitution de la lumière coopère avec la couche optiquement anisotrope structurée dont la structure correspond à une information d'image latente imprimée de manière réversible ou irréversible, des effets optiques étant ainsi visualisés au moyen de l'unité de polarisation de sortie (PE).

19. Procédé de représentation d'effets optiques selon la revendication 18, dans lequel la constitution de la lumière est modulée en fonction du temps et/ou en fonction du lieu dans l'unité de modulation (OME).

20. Procédé de représentation d'effets optiques selon la revendication 18 ou 19, dans lequel dans l'unité de retard d'objet (POB), l'information d'image est imprimée en fonction du temps et/ou en fonction du lieu par l'application d'énergie externe ciblée.

21. Procédé de représentation d'effets optiques selon l'une quelconque des revendications 18 à 20, dans lequel les effets optiques se posant dans l'objet représentant (DO) sont rendus invisibles par l'élimination de la polarisation au moins par endroits.

22. Procédé de représentation d'effets optiques selon la revendication 21, dans lequel l'élimination de la polarisation est obtenue par l'enlèvement d'au moins une unité de polarisation (POE, PE).

23. Procédé de représentation d'effets optiques selon l'une quelconque des revendications 18 à 22, dans lequel l'application de l'énergie de l'unité de modulation (OME) est effectuée sur au moins une substance mésogène, notamment du cristal liquide.

24. Procédé de représentation d'effets optiques selon l'une quelconque des revendications 18 à 23, dans lequel l'application de l'énergie de l'unité de modulation (OME) est commandée de manière correspondante à un signal de base (Si).

25. Procédé de représentation d'effets optiques selon la revendication 24, dans lequel le signal de base (Si) suit au moins un signal modulé, notamment un signal audio (SS1, SS2).

26. Procédé de représentation d'effets optiques selon l'une quelconque des revendications 18 à 25, dans lequel la lumière (Sout) rencontrant l'objet représentant (DO) à partir du dispositif d'illumination (BV) passe à travers l'objet représentant (DO) pour pouvoir être regardée de l'autre côté de l'objet représentant (DO).

27. Procédé de représentation d'effets optiques selon l'une quelconque des revendications 18 à 26, dans lequel la lumière (Sout) rencontrant l'objet représentant (DO) à partir du dispositif d'illumination (BV) est réfléchie dans l'objet représentant (DO) pour pouvoir être regardée du côté d'entrée de l'objet représentant (DO).
